# EUROPEAN PATENT APPLICATION

(11) **EP 4 768 198 A1**
(43) Date of publication of application: **01.07.2026**
(21) Application number: 25216534.5
(22) Date of filing: 18.11.2025
(51) Int. Cl.: B25J 9/16, E05F 15/695, E05F 15/70, E05F 15/71, G05B 15/02, G05B 19/402, G05B 19/406, G05B 19/418

(54) **CONTROL SYSTEM AND CONTROL METHOD**

(30) Priority: 27.12.2024 JP 2024231851
(71) Applicant: Toyota Jidosha Kabushiki Kaisha, Toyota-shi, Aichi-ken 471-8571 (JP)
(72) Inventor: TAKAHASHI, Satoshi, Toyota-shi, 471-8571 (JP); CHIBA, Hiroya, Toyota-shi, 471-8571 (JP); KANOU, Takeshi, Toyota-shi, 471-8571 (JP); YANG, Sen, Toyota-shi, 471-8571 (JP); UEDA, Kazuhiko, Toyota-shi, 471-8571 (JP); KAKUMA, Daisuke, Toyota-shi, 471-8571 (JP); IWAHORI, Kento, Toyota-shi, 471-8571 (JP); TAKBIR IBRAHIM, Naufal, Obu-shi, 474-8588 (JP)
(74) Representative: TBK

(57) **Abstract**

A control system includes a moving object, an acquisition unit, and a control unit. The moving object is mounted with a component whose open-close state is changeable. The component separates an inside and an outside of the moving object in a close state. The acquisition unit acquires step information indicating a production step to be executed to the moving object. The control unit controls the open-close state of the component in such a manner that the open-close state of the component becomes the close state in a specific production step when the production step identified by the step information includes the specific production step. The specific production step is a production step in which the moving object has a possibility to contact water.

## Description

### BACKGROUND

### FIELD

The present disclosure relates to a control system and a control method.

### RELATED ART

Conventionally, known vehicles are mounted with various types of components, such as a window, a door, a trunk lid, a roof, and/or the like, whose open-close states are changeable (Japanese Unexamined Patent Application Publication No. 2006-350565).

In a work step in which a moving object such as a vehicle contacts liquid such as water, when the open-close state of the component is the open state, an inside of the moving object may be soaked with water.

### SUMMARY

The present disclosure is achievable as the following aspects.
(1) According to one aspect of the present disclosure, a control system is provided. In a control system that controls an open-close state of a component that is installed in a moving object and whose open-close state is changeable, the component separates an inside and an outside of the moving object in a close state. The control system includes an acquisition unit and a control unit. The acquisition unit acquires step information indicating a work step to be executed to the moving object. The control unit controls the open-close state of the component in such a manner that the open-close state of the component becomes the close state in a specific work step when the work step identified by the step information includes the specific work step. The specific work step is a work step in which the moving object has a possibility to contact liquid. According to this aspect, the control system can cause the open-close state of the component installed in the moving object to be the close state in the work step in which the moving object has a possibility to contact liquid. Therefore, it can be suppressed that the inside of the moving object is soaked with water.
(2) In the aforementioned aspect, the acquisition unit may further acquire open-close information indicating the open-close state of the component. When the open-close state of the component identified by the open-close information is an open state, the control unit may change the open-close state of the component from the open state to the close state. According to this aspect, the control system can change the open-close state of the component from the open state to the close state in such a manner that the open-close state of the component becomes the close state in the work step in which the moving object has a possibility to contact liquid.
(3) In the aforementioned aspect, the acquisition unit may further acquire open-close information indicating the open-close state of the component at a time point after the control unit transmits a control signal to cause the open-close state of the component to be the close state. The control system may further include a notification unit that notifies a user of error information when the open-close state of the component identified by the open-close information at the time point is an open state. According to this aspect, after the control signal to cause the open-close state of the component to be the close state is transmitted by the control unit, the control system can confirm that the open-close state of the component is the close state. Then, the control system can notify the user of the error information when the open-close state of the component is the open state even after the control signal to cause the open-close state of the component to be the close state is transmitted by the control unit. Accordingly, the user can be encouraged to take action to cause the open-close state of the component to be the close state, and execution of the work step in which the moving object has a possibility to contact liquid while the open-close state of the component is the open state can be avoided. Therefore, it can more surely be suppressed that the inside of the moving object is soaked with water.
(4) In the aforementioned aspect, the acquisition unit may further acquire open-close information indicating the open-close state of the component at a time point after the control unit transmits a control signal to cause the open-close state of the component to be the close state. When the open-close state of the component identified by the open-close information at the time point is an open state, the control unit may cause a transport equipment to stop operation of transporting the moving object toward a place at which the specific work step is executed. According to this aspect, after the control signal to cause the open-close state of the component to be the close state is transmitted by the control unit, the control system can confirm that the open-close state of the component is the close state. Then, the control system can stop the operation of the transport equipment when the open-close state of the component is the open state even after the control signal to cause the open-close state of the component to be the close state is transmitted by the control unit. Accordingly, execution of the work step in which the moving object has a possibility to contact liquid while the open-close state of the component is the open state can be avoided. Therefore, it can more surely be suppressed that the inside of the moving object is soaked with water.
(5) In the aforementioned aspect, the moving object may be movable by unmanned driving. The acquisition unit may further acquire open-close information indicating the open-close state of the component at a time point after the control unit transmits a control signal to cause the open-close state of the component to be the close state. When the open-close state of the component identified by the open-close information at the time point is an open state, the control unit may cause the moving object to stop operation of moving by the unmanned driving toward a place at which the specific work step is executed. According to this aspect, after the control signal to cause the open-close state of the component to be the close state is transmitted by the control unit, the control system can confirm that the open-close state of the component is the close state. Then, the control system can operate as follows when the open-close state of the component is the open state even after the control signal to cause the open-close state of the component to be the close state is transmitted by the control unit. The control system can cause the moving object to stop the operation of moving by the unmanned driving for the work step in which the moving object has a possibility to contact liquid. Accordingly, execution of the work step in which the moving object has a possibility to contact liquid while the open-close state of the component is the open state can be avoided. Therefore, it can more surely be suppressed that the inside of the moving object is soaked with water.
(6) The aforementioned aspect may further include a detection unit that utilizes communication within the moving object to detect the open-close state of the component, and outputs the open-close information. According to this aspect, the control system can utilize the communication within the moving object to detect the open-close state of the component.
(7) The aforementioned aspect may further include a sensor and a detection unit. The senor may detect the moving object from an outside of the moving object. The detection unit uses a detection result of the sensor to detect the open-close state of the component, and outputs the open-close information. According to this aspect, the control system can use the sensor to detect the open-close state of the component from the outside of the moving object.
(8) In the aforementioned aspect, the acquisition unit may acquire the step information by utilizing communication between the moving object and equipment installed in a place at which the work step is executed. According to this aspect, the control system can acquire the step information by utilizing the communication between the moving object and the equipment installed in the place where the work step is executed.
(9) The aforementioned aspect may further include a memory storing database indicating the specific work step. When the work step identified by the step information is included in the database, the control unit may determine that the work step included in the database is the specific work step. According to this aspect, the control system can use the database to easily determine whether the work step identified by the step information includes the specific work step. Therefore, the control system can easily determine whether to cause the open-close state of the component to be the close state.
(10) In the aforementioned aspect, the acquisition unit may further acquire required time information indicating time required to change the open-close state of the component from an open state to the close state. The control unit may use the required time information to start control of the component in such a manner that the open-close state of the component becomes the close state before a start of the specific work step. According to this aspect, the control system can cause the open-close state of the component to be the close state before the start of the work step in which the moving object has a possibility to contact liquid. Therefore, it can more surely be suppressed that the inside of the moving object is soaked with water.
(11) In the aforementioned aspect, the specific work step may be a liquid leak inspection step in which whether the liquid enters inside the moving object when the liquid is poured over the moving object. According to this aspect, in the liquid leak inspection step, it can be suppressed that liquid injected to the moving object enters inside the moving object and the moving object is soaked with water.
(12) In the aforementioned aspect, the specific work step may be the work step in which the moving object moves outdoors. According to this aspect, in the work step in which the moving object moves outdoors, it can be suppressed that rain or snow falls enter inside the moving object and the inside of the moving object is soaked with water.
(13) In the aforementioned aspect, the specific work step may be a washing step in which a body of the moving object is washed. According to this aspect, in the washing step, it can be suppressed that liquid used to wash the moving object enters inside the moving object and the inside of the moving object is soaked with water.
(14) In the aforementioned aspect, the component may be at least one of a window, a door, a trunk lid, a hood, and a roof. According to this aspect, in the work step in which the moving object has a possibility to contact liquid, it can be suppressed that the inside of the moving object is soaked with water due to the open-close state of at least one of the window, the door, the trunk lid, the hood, and the roof being the open state.
(15) According to another aspect of the present disclosure, a control method is provided. In a method for controlling an open-close state of a component that is installed in a moving object and whose open-close state is changeable, the component separates an inside and an outside of the moving object in a close state. The method includes an acquisition step and a control step. In the acquisition step, step information indicating a work step to be executed to the moving object is acquired. In the control step, the open-close state of the component is controlled in such a manner that the open-close state of the component becomes the close state in a specific work step when the work step identified by the step information includes the specific work step. The specific work step is a work step in which the moving object has a possibility to contact liquid. According to this aspect, by execution of the acquisition step and the control step, the open-close state of the component installed in the moving object can be made the close state in the work step in which the moving object has a possibility to contact liquid. Therefore, it can be suppressed that the inside of the moving object is soaked with water.

The present disclosure can be implemented in various aspects other than the control system and the control method described above. For example, the present disclosure can be implemented in aspects, such as a method for manufacturing a control system, a computer program to realize a method for controlling a control system, and a non-transitory recording medium recording the computer program.

### BRIEF DESCRIPTION OF THE DRAWINGS

Fig. 1 is a conceptual diagram illustrating a configuration of a control system according to a first embodiment;
Fig. 2 is a block diagram illustrating a configuration of the control system according to the first embodiment;
Fig. 3 is a flowchart illustrating a procedure for running control of a vehicle according to the first embodiment;
Fig. 4 is a flowchart illustrating one example of a method for controlling a component;
Fig. 5 is a flowchart illustrating details of an acquisition step according to the first embodiment;
Fig. 6 is a flowchart illustrating details of a control step according to the first embodiment;
Fig. 7 is a block diagram illustrating a configuration of a control system according to a second embodiment;
Fig. 8 is a flowchart illustrating details of a control step according to the second embodiment;
Fig. 9 is a block diagram illustrating a configuration of a control system according to a third embodiment;
Fig. 10 is a flowchart illustrating details of a control step according to the third embodiment;
Fig. 11 is a block diagram illustrating a configuration of a control system according to a fourth embodiment;
Fig. 12 is a flowchart illustrating another example of a method for controlling a component;
Fig. 13 is a flowchart illustrating details of a confirmation step according to the fourth embodiment;
Fig. 14 is a block diagram illustrating a configuration of a control system according to a fifth embodiment;
Fig. 15 is a flowchart illustrating details of a confirmation step according to the fifth embodiment;
Fig. 16 is a block diagram illustrating a configuration of a control system according to a sixth embodiment;
Fig. 17 is a flowchart illustrating details of a confirmation step according to the sixth embodiment;
Fig. 18 is a block diagram illustrating a configuration of a control system according to a seventh embodiment;
Fig. 19 is a flowchart illustrating details of a control step according to the seventh embodiment;
Fig. 20 is an explanatory diagram illustrating a schematic configuration of a control system according to an eighth embodiment; and
Fig. 21 is a flowchart illustrating a procedure for running control of a vehicle according to the eighth embodiment.

### DETAILED DESCRIPTION

### A. First Embodiment:

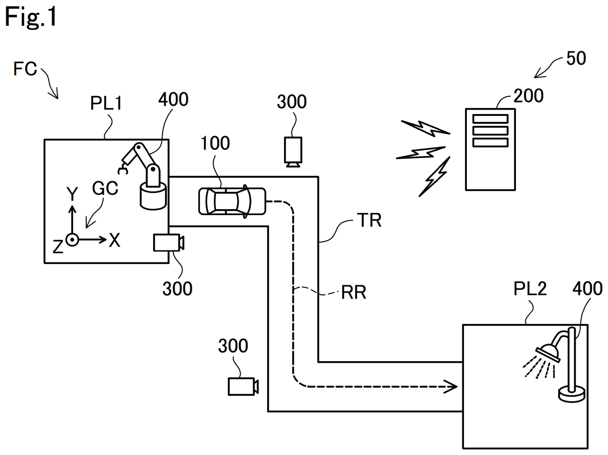

Fig. 1 is a conceptual diagram illustrating a configuration of a control system 50 according to a first embodiment. The control system 50 includes one or more vehicles 100 as a moving object, a server 200, and one or more external sensors 300.

In the present disclosure, the "moving object" means an object capable of moving, and is a vehicle or an electric vertical takeoff and landing aircraft (so-called flying-automobile), for example. The vehicle may be a vehicle to run with a wheel or may be a vehicle to run with a continuous track, and may be a passenger car, a truck, a bus, a two-wheel vehicle, a four-wheel vehicle, or a construction vehicle, for example. The vehicle includes a battery electric vehicle (BEV), a gasoline automobile, a hybrid automobile, and a fuel cell automobile. When the moving object is other than a vehicle, the term "vehicle" or "car" in the present disclosure is replaceable with a "moving object" as appropriate, and the term "run" is replaceable with "move" as appropriate.

The vehicle 100 is configured to be capable of running by unmanned driving. The "unmanned driving" means driving independent of running operation by a passenger. The running operation means operation relating to at least one of "run," "turn," and "stop" of the vehicle 100. The unmanned driving is realized by automatic remote control or manual remote control using a device provided outside the vehicle 100 or by autonomous control by the vehicle 100. A passenger not involved in running operation may be on-board a vehicle running by the unmanned driving. The passenger not involved in running operation includes a person simply sitting in a seat of the vehicle 100 and a person doing work such as assembly, inspection, or operation of switches different from running operation while on-board the vehicle 100. Driving by running operation by a passenger may also be called "manned driving."

In the present specification, the "remote control" includes "complete remote control" by which all motions of the vehicle 100 are completely determined from outside the vehicle 100, and "partial remote control" by which some of the motions of the vehicle 100 are determined from outside the vehicle 100. The "autonomous control" includes "complete autonomous control" by which the vehicle 100 controls a motion of the vehicle 100 autonomously without receiving any information from a device outside the vehicle 100, and "partial autonomous control" by which the vehicle 100 controls a motion of the vehicle 100 autonomously using information received from a device outside the vehicle 100.

In this embodiment, the control system 50 is used in a factory FC where the vehicle 100 is produced through execution of a plurality of production steps. A reference coordinate system in the factory FC is a global coordinate system GC, and any position in the factory FC can be represented by X, Y, and Z coordinates in the global coordinate system GC. The factory FC includes a first place PL1 and a second place PL2. In each of the places PL1 and PL2, for example, one or more actual steps, such as a painting step, an assembly step, and an inspection step are executed among the plurality of production steps. The first place PL1 and the second place PL2 are connected to one another through a track TR on which the vehicle 100 is runnable. On the track TR, a transport step in which the vehicle 100 is transported from the first place PL1 to the second place PL2 is executed among the plurality of production steps. In the factory FC, a plurality of external sensors 300 is disposed along the track TR. A position of each external sensor 300 in the factory FC is adjusted in advance. The vehicle 100 moves from the first place PL1 to the second place PL2 through the track TR by unmanned driving. Note that the configuration of the factory FC is not limited to that described above. At least one of the first place PL1 and the second place PL2 may be, for example, a storage site such as a yard where the vehicle 100 is stored.

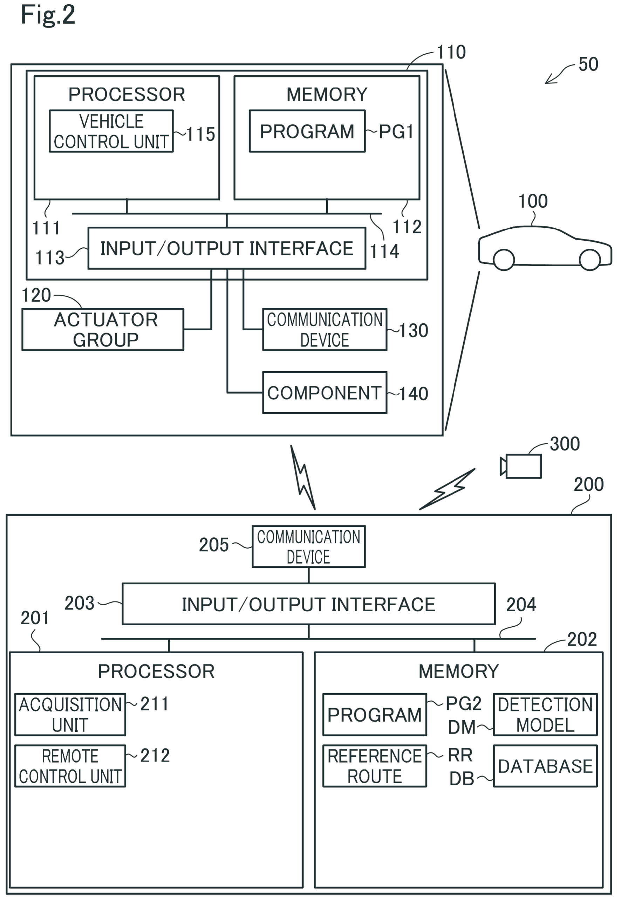

Fig. 2 is a block diagram illustrating a configuration of the control system 50 according to the first embodiment. The vehicle 100 includes a vehicle control device 110 that controls each unit of the vehicle 100, an actuator group 120 including one or more actuators that perform driving under control of the vehicle control device 110, and a communication device 130 to communicate with an external device, such as the server 200, by wireless communication. The actuator group 120 includes an actuator for a driving device to accelerate the vehicle 100, an actuator for a steering device to change a traveling direction of the vehicle 100, and an actuator for a braking device to decelerate the vehicle 100.

Moreover, the vehicle 100 is mounted with a component 140 whose open-close state is changeable. The component 140 separates an inside and an outside of the vehicle 100 in a close state. Accordingly, the actuator group 120 further includes a specific actuator to change the open-close state of the component 140. Examples of the component 140 include doors, such as a front door and a rear door, that separate an inside and an outside of a cabin. The component 140 may be a door, such as a back door, that separates an inside and an outside of a luggage compartment, a trunk lid that separates an inside and an outside of a trunk room, a hood that separates an inside and an outside of an engine room, or a roof, such as a sunroof or a moonroof, that separates the inside and the outside of the cabin. Note that the vehicle 100 may be mounted with the component 140 other than those described above.

The vehicle control device 110 includes a computer including a processor 111, a memory 112, an input/output interface 113, and an internal bus 114. The processor 111, the memory 112, and the input/output interface 113 are coupled to one another via the internal bus 114 in a bidirectionally communicable manner. The actuator group 120 and the communication device 130 are coupled to the input/output interface 113. The processor 111 executes a program PG1 stored in the memory 112, thus implementing various functions including a function as a vehicle control unit 115.

The vehicle control unit 115 controls the actuator group 120 to cause the vehicle 100 to run. The vehicle control unit 115 can use a running control signal received from the server 200 to control the actuator group 120, thereby causing the vehicle 100 to run. The running control signal is a control signal to cause the vehicle 100 to run. In this embodiment, the running control signal includes, as parameters, acceleration and a steering angle of the vehicle 100. In another embodiment, the running control signal may include, alternative to or in addition to the acceleration of the vehicle 100, speed of the vehicle 100 as a parameter.

Further, the vehicle control unit 115 uses a component control signal received from the server 200 to control the specific actuator, and thereby changes the open-close state of the component 140. The component control signal is a control signal to change the open-close state of the component 140. In this embodiment, the component 140 to be controlled is a power window whose open-close state is changeable by external, electric control. Therefore, when the vehicle control unit 115 receives from the server 200 the component control signal to cause the open-close state of the power window to be the close state, the vehicle control unit 115 uses the received component control signal to control the specific actuator for changing the open-close sate of the power window. Accordingly, the vehicle control unit 115 causes the open-close state of the power window to be the close state.

The server 200 includes a computer including a processor 201, a memory 202, an input/output interface 203, and an internal bus 204. The processor 201, the memory 202, and the input/output interface 203 are coupled to one another via the internal bus 204 in a bidirectionally communicable manner. A communication device 205 to communicate with various devices outside of the server 200 is coupled to the input/output interface 203. The communication device 205 can communicate with the vehicle 100 by wireless communication and communicate with each external sensor 300 by wired or wireless communication. The processor 201 executes a program PG2 stored in the memory 202, thus implementing various functions including functions as an acquisition unit 211 and a remote control unit 212.

The acquisition unit 211 acquires step information indicating a production step to be executed to the vehicle 100. For example, the acquisition unit 211 acquires the step information by utilizing communication between the vehicle 100 and production equipment 400, such as a shower tester, installed in each of the places PL1 and PL2 where the production step is executed. In this case, for example, the vehicle 100 acquires, from the production equipment 400 installed around a current position of the vehicle 100, equipment identification information to identify the production equipment 400. Then, the vehicle 100 transmits the equipment identification information acquired from the production equipment 400 to the server 200. The acquisition unit 211 identifies based on the equipment identification information at least one of a last production step executed to the vehicle 100, a production step currently executed to the vehicle 100, and a next production step to be executed to the vehicle 100. Then, the acquisition unit 211 identifies the production step to be executed after the production step currently executed to the vehicle 100 based on an execution order of the plurality of production steps determined in advance, thereby acquiring the step information.

Note that the method for acquiring the step information is not limited to that described above. The acquisition unit 211 may utilize communication between the vehicle 100 and the production equipment 400 to acquire the step information as follows. For example, the vehicle 100 receives radio waves emitted from an emitter of the production equipment 400 installed around the current position of the vehicle 100. A frequency of the radio waves is different per production equipment 400. The vehicle 100 transmits to the server 200 frequency information indicating the frequency of the radio waves received from the production equipment 400. The acquisition unit 211 identifies based on the frequency information at least one of the last production step executed to the vehicle 100, the production step currently executed to the vehicle 100, and the next production step to be executed to the vehicle 100. Then, the acquisition unit 211 identifies the production step to be executed after the production step currently executed to the vehicle 100 based on the execution order of the plurality of production steps, thereby acquiring the step information.

The acquisition unit 211 may use vehicle position information to acquire the step information. In this case, for example, the acquisition unit 211 collates a position of the vehicle 100 in the global coordinate system GC with a map indicating positions of the places PL1 and PL2, and TR in the factory FC in the global coordinate system GC, thereby identifying the production step currently executed to the vehicle 100. Then, the acquisition unit 211 identifies the production step to be executed after the production step currently executed to the vehicle 100 based on the execution order of the plurality of production steps, thereby acquiring the step information.

The acquisition unit 211 may use production management information of the vehicle 100 to acquire the step information. The production management information is, for example, information indicating a scheduled start time of each production step for each vehicle 100. In this case, for example, the acquisition unit 211 acquires from the vehicle 100 vehicle identification information, such as a VIN number, to identify the vehicle 100. Then, the acquisition unit 211 identifies from the production management information the production step currently executed to the vehicle 100 based on current time. Then, the acquisition unit 211 identifies the production step to be executed after the production step currently executed to the vehicle 100 based on the execution order of the plurality of production steps, thereby acquiring the step information.

The remote control unit 212 acquires a detection result of the sensor and uses the detection result to generate the running control signal to control the actuator group 120 of the vehicle 100. The remote control unit 212 then transmits the running control signal to the vehicle 100 to cause the vehicle 100 to run by remote control.

Further, when the production step identified by the step information includes a specific production step in which the vehicle 100 has a possibility to contact water, the remote control unit 212 controls the open-close state of the component 140 in such a manner that the open-close sate of the component 140 becomes the close state in the specific production step. The specific production step is, for example, a water leak inspection step in which whether water enters inside the vehicle 100 when water is poured over the vehicle 100. The specific production step may be a production step in which the vehicle 100 runs outdoors, or a washing step in which a body of the vehicle 100 is washed. In this embodiment, when the production step identified by the step information is included in a database DB stored in the memory 202 in advance and indicating the specific production step, the remote control unit 212 makes a determination as follows. In this case, the remote control unit 212 determines that the production step included in the database DB is the specific production step. Then, regardless of the open-close state of the power window, the remote control unit 212 generates the component control signal to cause the open-close state of the power window to be the close state in the specific production step and transmits the component control signal to the vehicle 100. Accordingly, the remote control unit 212 causes the open-close state of the power window to be the close state by remote control. Note that the method for determining the specific production step is not limited to that described above.

The external sensor 300 is a sensor located outside of the vehicle 100. The external sensor 300 in this embodiment is a sensor that detects the vehicle 100 from outside of the vehicle 100. The external sensor 300 includes a communication device (not illustrated) and can communicate with another device, such as the server 200, by wired or wireless communication.

Specifically, the external sensor 300 includes a camera. The camera as the external sensor 300 captures an image of the vehicle 100 and outputs the captured image as the detection result.

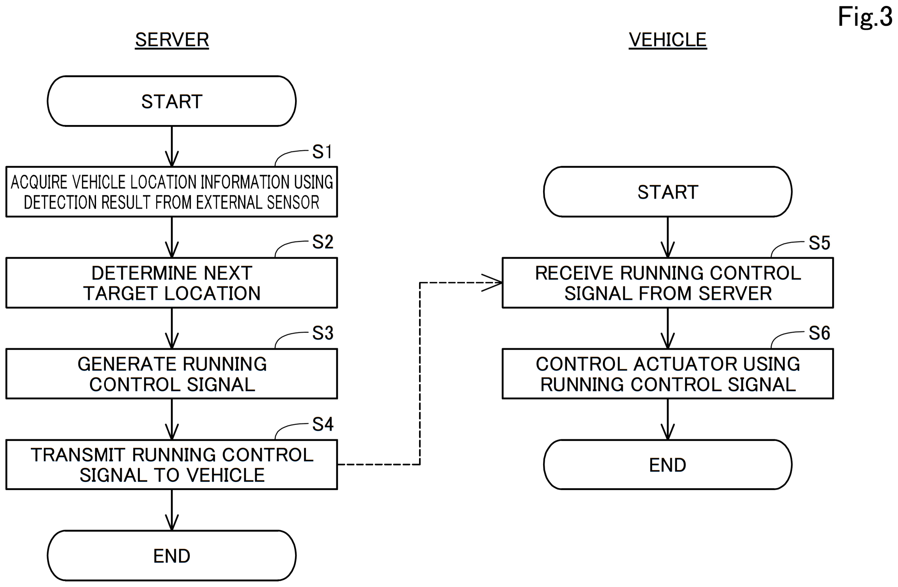

Fig. 3 is a flowchart illustrating a procedure for running control of the vehicle 100 according to the first embodiment. In the procedure illustrated in Fig. 3, the processor 201 of the server 200 executes the program PG2, thus functioning as the remote control unit 212. Moreover, the processor 111 of the vehicle 100 executes the program PG1, thus functioning as the vehicle control unit 115.

At Step S1, the processor 201 of the server 200 uses the detection result output from the external sensor 300 to acquire vehicle position information. The vehicle position information is position information that serves as a basis in generating the running control signal. In this embodiment, the vehicle position information includes a position and a direction of the vehicle 100 in the global coordinate system GC in the factory FC. Specifically, at Step S1, the processor 201 uses the captured image acquired from the camera that is the external sensor 300 to acquire the vehicle position information.

More specifically, in step S1, the processor 201 for example, determines the outer shape of the vehicle 100 from the captured image, calculates the coordinates of a positioning point of the vehicle 100 in a coordinate system of the captured image, namely, in a local coordinate system, and converts the calculated coordinates to coordinates in the global coordinate system, thereby acquiring the location of the vehicle 100. The outer shape of the vehicle 100 in the captured image may be detected by inputting the captured image to a detection model DM using artificial intelligence, for example. The detection model is prepared in the control system 50 or outside the control system 50. The detection model DM is stored in advance in a memory 202 of the server 200, for example. An example of the detection model DM is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 100, and a label showing whether each region in the training image is a region indicating the vehicle 100 or a region indicating a subject other than the vehicle 100, for example. In training the CNN, a parameter for the CNN is preferably updated through backpropagation in such a manner as to reduce error between output result obtained by the detection model and the label. The processor 201 can acquire the orientation of the vehicle 100 through estimation based on the direction of a motion vector of the vehicle 100 detected from change in location of a feature point of the vehicle 100 between frames of the captured images using optical flow process, for example.

In step S2, the processor 201 of the server 200 determines a target location to which the vehicle 100 is to move next. In the present embodiment, the target location is expressed by X, Y, and Z coordinates in the global coordinate system. The memory 202 of the server 200 contains a reference route RR stored in advance as a route along which the vehicle 100 is to run. The route is expressed by a node indicating a departure place, a node indicating a way point, a node indicating a destination, and a link connecting nodes to each other. The processor 201 determines the target location to which the vehicle 100 is to move next using the vehicle location information and the reference route RR. The processor 201 determines the target location on the reference route RR ahead of a current location of the vehicle 100.

In step S3, the processor 201 of the server 200 generates a running control signal for causing the vehicle 100 to run toward the determined target location. In the present embodiment, the running control signal includes an acceleration and a steering angle of the vehicle 100 as parameters. The processor 201 calculates a running speed of the vehicle 100 from transition of the location of the vehicle 100 and makes comparison between the calculated running speed and a target speed of the vehicle 100 determined in advance. If the running speed is lower than the target speed, the processor 201 generally determines an acceleration in such a manner as to accelerate the vehicle 100. If the running speed is higher than the target speed as, the processor 201 generally determines an acceleration in such a manner as to decelerate the vehicle 100. If the vehicle 100 is on the reference route RR, the processor 201 determines a steering angle and an acceleration in such a manner as to prevent the vehicle 100 from deviating from the reference route RR. If the vehicle 100 is not on the reference route, in other words, if the vehicle 100 deviates from the reference route, the processor 201 determines a steering angle and an acceleration in such a manner as to return the vehicle 100 to the reference route RR. In other embodiments, the running control signal may include the speed of the vehicle 100 as a parameter instead of or in addition to the acceleration of the vehicle 100.

In step S4, the processor 201 of the server 200 transmits the generated running control signal to the vehicle 100. The processor 201 repeats the acquisition of vehicle location information, the determination of a target location, the generation of a running control signal, the transmission of the running control signal, and others in a predetermined cycle.

In step S5, the processor 111 of the vehicle 100 receives the running control signal transmitted from the server 200. In step S6, the processor 111 of the vehicle 100 controls the actuator group 120 of the vehicle 100 using the received running control signal, thereby causing the vehicle 100 to run at the acceleration and the steering angle indicated by the running control signal. The processor 111 repeats the reception of a running control signal and the control over the actuator group 120 in a predetermined cycle. According to the control system 50 in the present embodiment, it becomes possible to move the vehicle 100 without using a transport unit such as a crane or a conveyor.

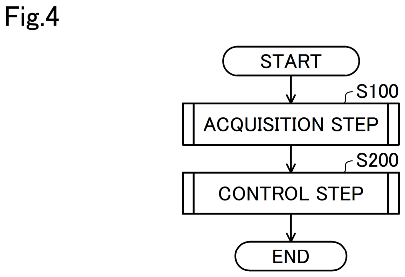

Fig. 4 is a flowchart illustrating one example of a method for controlling the component 140. In the control method illustrated in Fig. 4, an acquisition step at Step S100 and a control step at Step S200 are executed in this order. The acquisition step is a step to acquire the step information. The control step is a step to control the open-close state of the component 140 in such a manner that the open-close state of the component 140 becomes the close state in the specific production step. For example, the flow illustrated in Fig. 4 is repetitively executed at a time period determined in advance from a time point at which production of the vehicle 100 starts.

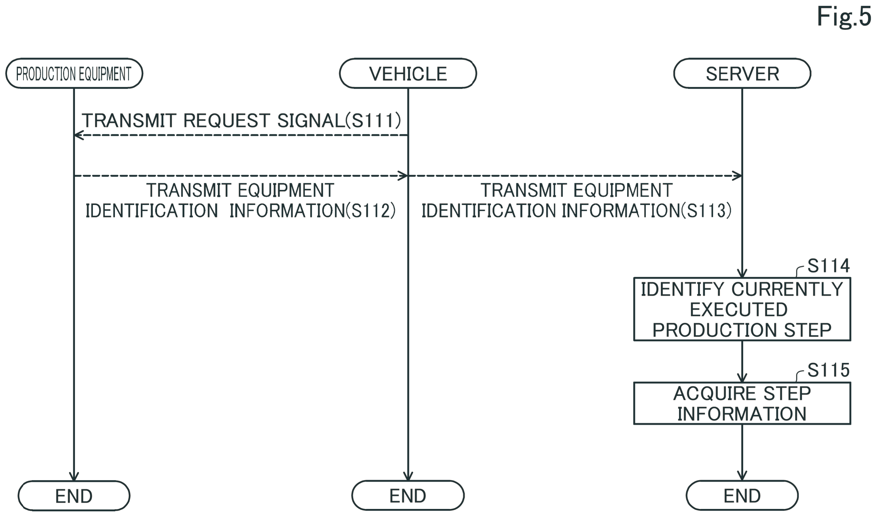

Fig. 5 is a flowchart illustrating details of the acquisition step according to the first embodiment. For example, the flow illustrated in Fig. 5 is started when time determined in advance has passed since a last execution timing. At Step S111, the vehicle 100 transmits to the production equipment 400 a request signal to acquire the equipment identification information. In response to reception of the request signal, at Step S112, the production equipment 400 transmits to the vehicle 100 the equipment identification information indicating itself. At Step S113, the vehicle 100 transmits to the server 200 the equipment identification information received from the production equipment 400. At Step S114, the acquisition unit 211 of the server 200 identifies the production step currently executed to the vehicle 100 based on the equipment identification information. At Step S115, the acquisition unit 211 identifies the production step to be executed after the production step currently executed to the vehicle 100 based on the execution order of the plurality of production steps, and thereby acquires the step information.

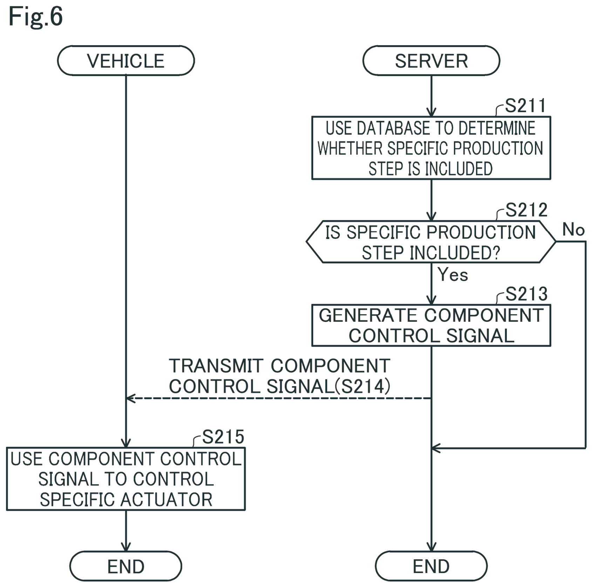

Fig. 6 is a flowchart illustrating details of the control step according to the first embodiment. For example, the flow illustrated in Fig. 6 is started when the acquisition of the step information is completed. At Step S211, the remote control unit 212 of the server 200 uses the database DB indicating the specific production step to determine whether the production step identified by the step information includes the specific production step. If the production step identified by the step information does not include the specific production step (Step S212: No), the remote control unit 212 ends this flow without controlling the open-close state of the power window. If the production step identified by the step information includes the specific production step (Step S212: Yes), Step S213 is executed. At Step S213, the remote control unit 212 generates the component control signal to cause the open-close state of the power window to be the close state in the specific production step. At Step S214, the remote control unit 212 transmits the generated component control signal to the vehicle 100. In response to reception of the component control signal, at Step S215, the vehicle control unit 115 of the vehicle 100 uses the received component control signal to control the specific actuator. Accordingly, the open-close state of the power window is made the close state in the specific production step.

According to the first embodiment, the control system 50 executes the acquisition step and the control step in this order to cause the open-close state of the component 140 installed in the vehicle 100 to be the close state in the production step in which the vehicle 100 has a possibility to contact water. Therefore, it can be suppressed that the inside of the vehicle 100 is soaked with water. In particular, in a case in which the vehicle 100 runs by unmanned driving and the vehicle 100 does not have an occupant, it may be unrecognizable that the open-close state of the component 140 is the open state during execution of the production step in which the vehicle 100 has a possibility to contact water. With regard to this, according to the first embodiment, the control system 50 can automatically cause the open-close state of the component 140 to be the close state by remote control. Therefore, even when the vehicle 100 does not have an occupant, it can be suppressed that the inside of the vehicle 100 is soaked with water due to the open-close state of the component 140 being the open state.

Moreover, according to the first embodiment, the control system 50 can utilize the communication between the vehicle 100 and the production equipment 400 to acquire the step information.

Moreover, according to the first embodiment, the control system 50 can use the database DB to easily determine whether the production step identified by the step information includes the specific production step. Therefore, the control system 50 can easily determine whether to cause the open-close state of the component 140 to be the close state.

Moreover, according to the first embodiment, in the water leak inspection step, it can be suppressed that water injected to the vehicle 100 enters inside the vehicle 100 and the inside of the vehicle 100 is soaked with water.

Moreover, according to the first embodiment, in the production step in which the vehicle 100 runs outdoors, it can be suppressed that rain or snow falls enter inside the vehicle 100 and the inside of the vehicle 100 is soaked with water.

Moreover, according to the first embodiment, in the washing step, it can be suppressed that washing water to wash the vehicle 100 enters inside the vehicle 100 and the inside of the vehicle 100 is soaked with water.

Moreover, according to the first embodiment, in the production step in which the vehicle 100 has a possibility to contact water, it can be suppressed that the inside of the vehicle 100 is soaked with water due to the open-close state of at least one of a window, a door, a trunk lid, a hood, and a roof being the open state.

### B. Second Embodiment:

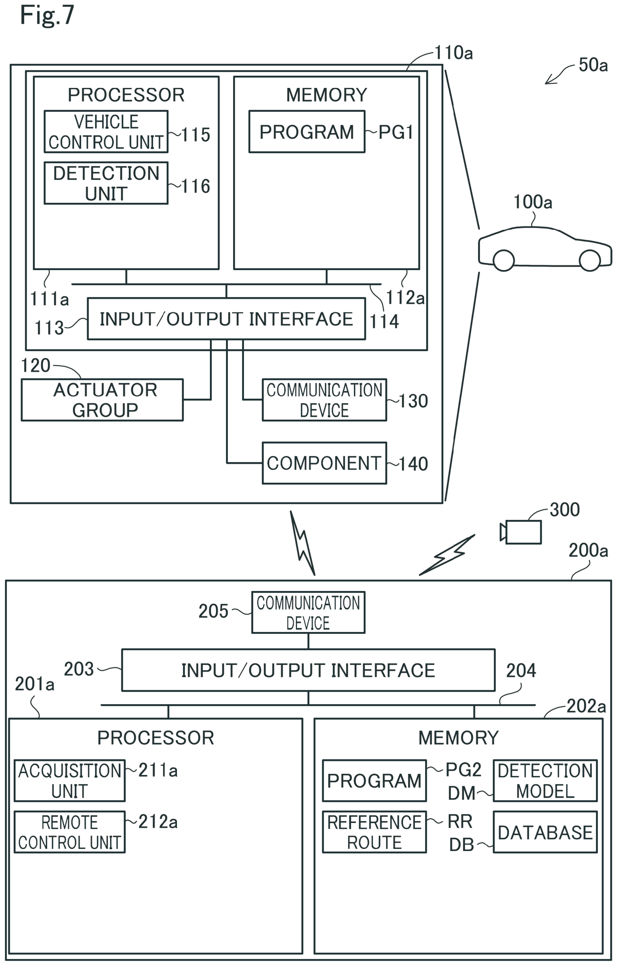

Fig. 7 is a block diagram illustrating a configuration of a control system 50a according to a second embodiment. In this embodiment, the control system 50a controls the open-close state of the component 140 only when the open-close state of the component 140 is the open state. Other configurations are the same as those of the first embodiment unless otherwise described. The same configurations as those of the first embodiment are denoted by the same reference characters, and description thereof is omitted.

A processor 111a of a vehicle control device 110a executes the program PG1 stored in a memory 112a, thus implementing various functions including functions as the vehicle control unit 115 and a detection unit 116.

The detection unit 116 detects the open-close state of the component 140 and outputs open-close information indicating the open-close state of the component 140. Also in this embodiment, the component 140 is a power window whose open-close state is changeable by external, electric control. Therefore, for example, the detection unit 116 utilizes communication within a vehicle 100a, such as CAN (controller area network), to detect the open-close state of the component 140.

A processor 201a of a server 200a executes the program PG2 stored in a memory 202a, thus implementing various functions including functions as an acquisition unit 211a and a remote control unit 212a.

The acquisition unit 211a acquires, in addition to the step information, the open-close information output from the detection unit 116.

When the production step identified by the step information includes the specific production step and the open-close state of the component 140 identified by the open-close information is the open state, the remote control unit 212a generates the component control signal and transmits the component control signal to the vehicle 100a. Therefore, when the production step identified by the step information includes the specific production step and the open-close state of the component 140 identified by the open-close information is the open state, the remote control unit 212a changes the open-close state of the component 140 from the open state to the close state.

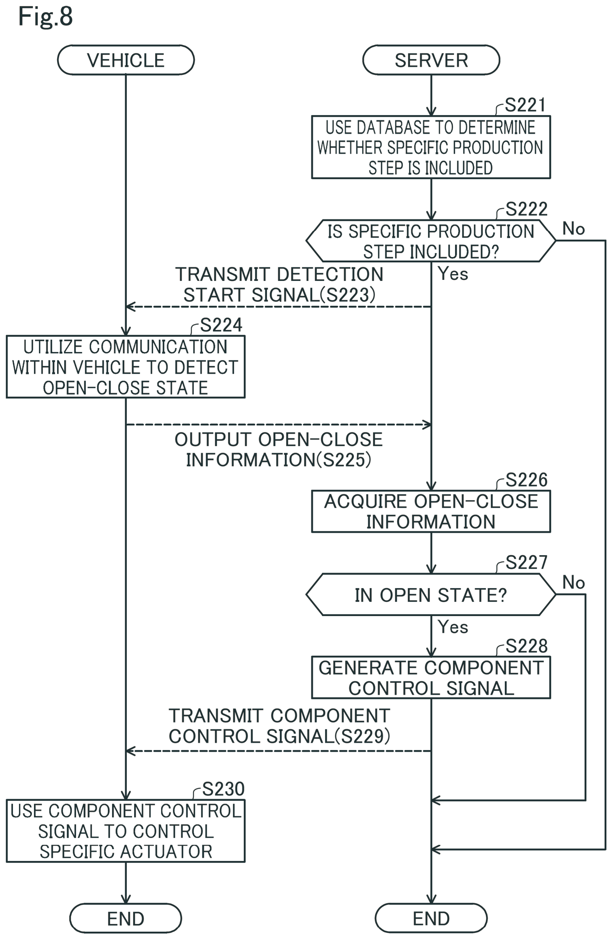

Fig. 8 is a flowchart illustrating details of a control step according to the second embodiment. For example, the flow illustrated in Fig. 8 is started when the acquisition of the step information is completed. At Step S221, the remote control unit 212a of the server 200a uses the database DB indicating the specific production step to determine whether the production step identified by the step information includes the specific production step. If the production step identified by the step information does not include the specific production step (Step S222: No), the remote control unit 212a ends this flow without controlling the open-close state of the power window. If the production step identified by the step information includes the specific production step (Step S222: Yes), Step S223 is executed. At Step S223, the remote control unit 212a transmits to the vehicle 100a a detection start signal to start detection of the open-close state of the power window. In response to reception of the detection start signal, at Step S224, the detection unit 116 of the vehicle 100a utilizes the communication within the vehicle 100a to detect the open-close state of the power window. At Step S225, the detection unit 116 outputs to the server 200a the open-close information as the detection result. Accordingly, at Step S226, the acquisition unit 211a of the server 200a acquires the open-close information. If the open-close state of the power window identified by the open-close information is the close state (Step S227: No), the remote control unit 212a ends this flow without controlling the open-close state of the power window. That is, in this case, the remote control unit 212a maintains the open-close state of the power window in the close state. If the open-close state of the power window identified by the open-close information is the open state (Step S227: Yes), Step S228 is executed. At Step S228, the remote control unit 212a generates the component control signal to cause the open-close state of the power window to be the close state in the specific production step. At Step S229, the remote control unit 212a transmits the generated component control signal to the vehicle 100a. In response to reception of the component control signal, at Step S230, the vehicle control unit 115 of the vehicle 100a uses the received component control signal to control the specific actuator. Accordingly, the open-close state of the power window is changed from the open state to the close state in such a manner that the open-close state of the power window becomes the close state in the specific production step.

According to the second embodiment, the control system 50a can operate as follows when the open-close state of the component 140 is the open state in the production step in which the vehicle 100a has a possibility to contact water. The control system 50a can automatically change the open-close state of the component 140 from the open state to the close state by remote control in such a manner that the open-close state of the component 140 becomes the close state in the production step in which the vehicle 100a has a possibility to contact water.

Moreover, according to the second embodiment, the control system 50a can utilize the communication within the vehicle 100a through a communication line within the vehicle 100a to detect the open-close state of the component 140.

Note that the component 140 whose open-close state is detectable by utilizing the communication within the vehicle 100a is not limited to the power window. The component 140 whose open-close state is detectable by utilizing the communication within the vehicle 100a may be, for example, a power door, an electric trunk lid, or an electric roof as long as the open-close state of the component 140 is changeable by external, electric control.

### C. Third Embodiment:

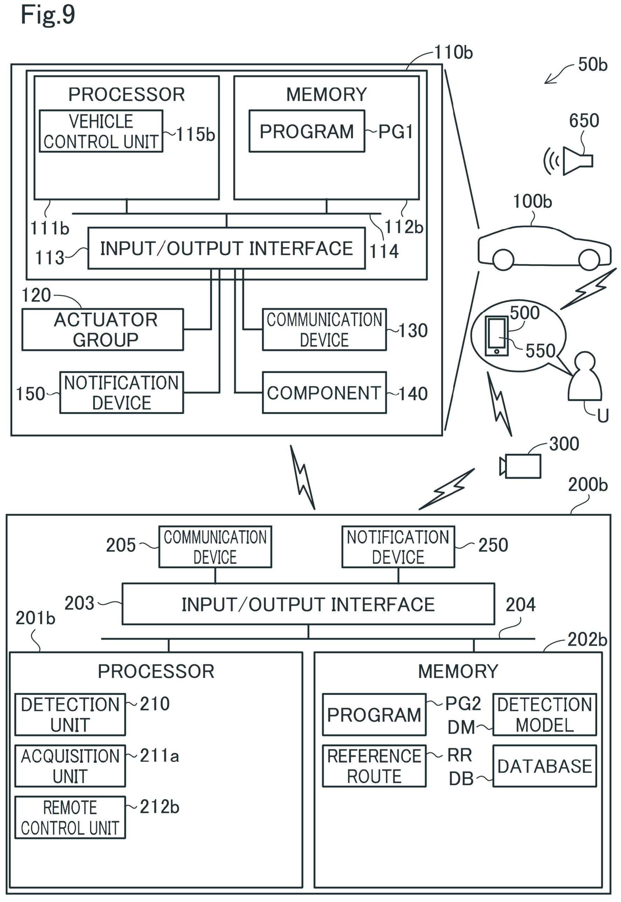

Fig. 9 is a block diagram illustrating a configuration of a control system 50b according to a third embodiment. In this embodiment, a type of the component 140 to be controlled is different from that in the first embodiment. Specifically, in this embodiment, the component 140 to be controlled is a hood whose open-close state is changeable by mechanical operation. The open-close state of the component 140 whose open-close state is changeable by mechanical operation, like the hood, may not be detectable by utilizing communication within a vehicle 100b. Therefore, in this embodiment, the control system 50b detects the open-close state of the component 140 without utilizing the communication within the vehicle 100b. Moreover, the component 140 whose open-close state is changeable by mechanical operation, like the hood, may not be able to change the open-close state thereof by external, electric control. Therefore, in this embodiment, the control system 50b causes the open-close state of the component 140 to be changed from the open state to the close state by notifying a user U that the open-close state of the component 140 is the open state. Other configurations are the same as those of the first embodiment unless otherwise described. The same configurations as those of each embodiment described above are denoted by the same reference characters, and description thereof is omitted.

A processor 201b of a server 200b executes the program PG2 stored in a memory 202b, thus implementing various functions including functions as a detection unit 210, the acquisition unit 211a, and a remote control unit 212b.

The detection unit 210 detects the open-close state of the component 140 without utilizing the communication within the vehicle 100b. In this embodiment, the detection unit 210 uses the detection result of the camera as the external sensor 300 to detect the open-close state of the component 140. At this time, detection of the open-close state of the component 140 may be performed by using a machine learning model as in the acquisition of the vehicle position information. Note that the method for detecting the open-close state of the component 140 is not limited to that described above. The detection unit 210 may use a detection result of an internal sensor installed in another vehicle 100b different from the vehicle 100b to be controlled, and detect the open-close state of the component 140.

The remote control unit 212b further notifies the user U that the component 140 is in the open state in the case in which the production step identified by the step information includes the specific production step. At this time, for example, the remote control unit 212b notifies the user U via at least one of a notification device 150 of the vehicle 100b, a notification device 250 of the server 200b, a notification device 550 of a portable terminal 500 held by the user U, and a notification device 650 installed in the factory FC. For example, the remote control unit 212b causes a horn to sound, and thereby notifies the user U that the open-close state of the component 140 is the open state. The horn is installed in the vehicle 100b and generates warning sound. The remote control unit 212b may cause a lamp installed in the vehicle 100b to be turned on or to blink, or cause a wiper installed in the vehicle 100b to swing, and thereby notify the user U that the open-close state of the component 140 is the open state. Moreover, the remote control unit 212b may display text information indicating that the open-close state of the component 140 is the open state on a display of the server 200b or the portable terminal 500 or a monitor installed in the factory FC, and thereby notify the user U that the open-close state of the component 140 is the open state. The remote control unit 212b may play audio information indicating that the open-close state of the component 140 is the open state from a speaker of the server 200b or the portable terminal 500 or a speaker installed in the factory FC, and thereby notify the user U that the open-close state of the component 140 is the open state. In this embodiment, the remote control unit 212b generates a notification control signal to sound the horn and transmits the notification control signal to the vehicle 100b to sound the horn by remote control. The notification control signal is a control signal to control operation of the notification devices 150, 250, 550, and 650.

A processor 111b of a vehicle control device 110b executes the program PG1 stored in a memory 112b, thus implementing various functions including a function as a vehicle control unit 115b.

The vehicle control unit 115b further uses the notification control signal received from the server 200b to control the notification device 150, and thereby notifies the user U of a variety of information. In this embodiment, when the vehicle control unit 115b receives from the server 200b the notification control signal to sound the horn, the vehicle control unit 115b uses the received notification control signal to sound the horn.

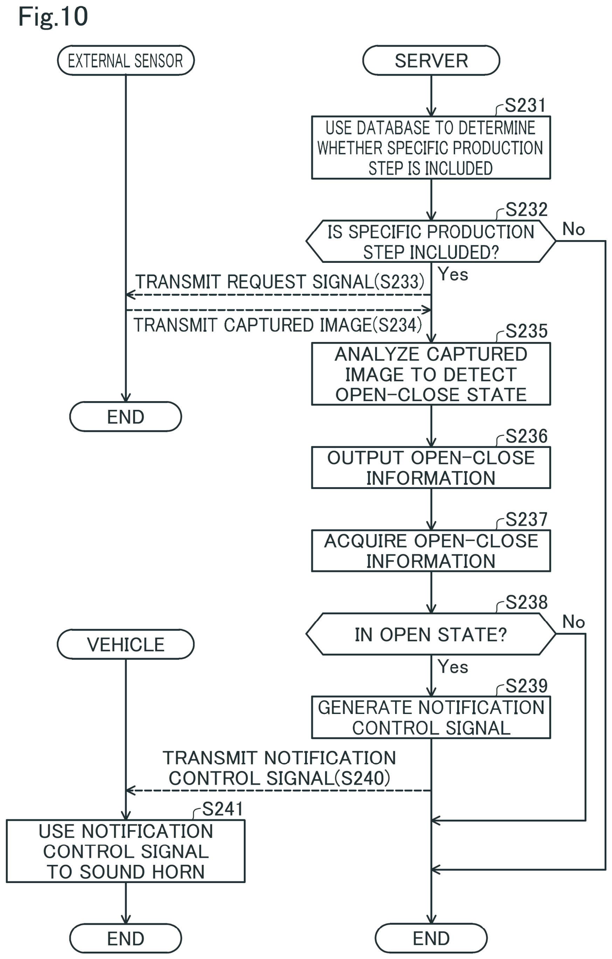

Fig. 10 is a flowchart illustrating details of a control step according to the third embodiment. For example, the flow illustrated in Fig. 10 is started when the acquisition of the step information is completed. At Step S231, the remote control unit 212a of the server 200b uses the database DB indicating the specific production step to determine whether the production step identified by the step information includes the specific production step. If the production step identified by the step information does not include the specific production step (Step S232: No), the remote control unit 212a ends this flow without notification for controlling the open-close state of the hood. If the production step identified by the step information includes the specific production step (Step S232: Yes), Step S233 is executed. At Step S233, the detection unit 210 of the server 200b transmits to the camera as the external sensor 300 the request signal to acquire the captured image. In response to reception of the request signal, at Step S234, the external sensor 300 transmits to the server 200b the captured image in which the vehicle 100b is imaged. In response to acquisition of the captured image, at Step S235, the detection unit 210 of the server 200b analyzes the captured image to detect the open-close state of the component 140. At Step S236, the detection unit 210 outputs the open-close information as the detection result. At Step S237, the acquisition unit 211a of the server 200b acquires the open-close information. If the open-close state of the hood identified by the open-close information is the close state (Step S238: No), the remote control unit 212b of the server 200b ends this flow without notification for controlling the open-close state of the hood. If the open-close state of the hood identified by the open-close information is the open state (Step S238: Yes), Step S239 is executed. At Step S239, the remote control unit 212b generates the notification control signal to sound the horn of the vehicle 100b. At Step S240, the remote control unit 212b transmits the generated notification control signal to the vehicle 100b. In response to reception of the notification control signal, at Step S241, the vehicle control unit 115 of the vehicle 100b uses the received notification control signal to sound the horn. Accordingly, the user U is notified that the open-close state of the hood is the open state and thereby manually changes the open-close state of the hood from the open state to the close state, so that the open-close state of the hood becomes the close state in the specific production step.

According to the third embodiment, the control system 50b notifies the user U that the open-close state of the component 140 is the open state via the notification devices 150, 250, 550, and/or 650, and can thereby operate as follows. The control system 50b can change the open-close state of the component 140 from the open state to the close state in such a manner that the open-close state of the component 140 becomes the close state in the production step in which the vehicle 100b has a possibility to contact water. With this configuration, in the production step in which the vehicle 100b has a possibility to contact water, even as for the component 140 whose open-close state is not changeable by external, electric control, the open-close state can be made the close state.

Moreover, according to the third embodiment, the control system 50b can use the sensor to detect the open-close state of the component 140 from the outside of the vehicle 100b.

Note that the component 140 whose open-close state is detectable by using the detection result of the sensor is not limited to the hood. The component 140 whose open-close state is detectable by using the detection result of the sensor may be, for example, the component 140, such as a power window, whose open-close state is changeable by external, electric control.

### D. Fourth Embodiment:

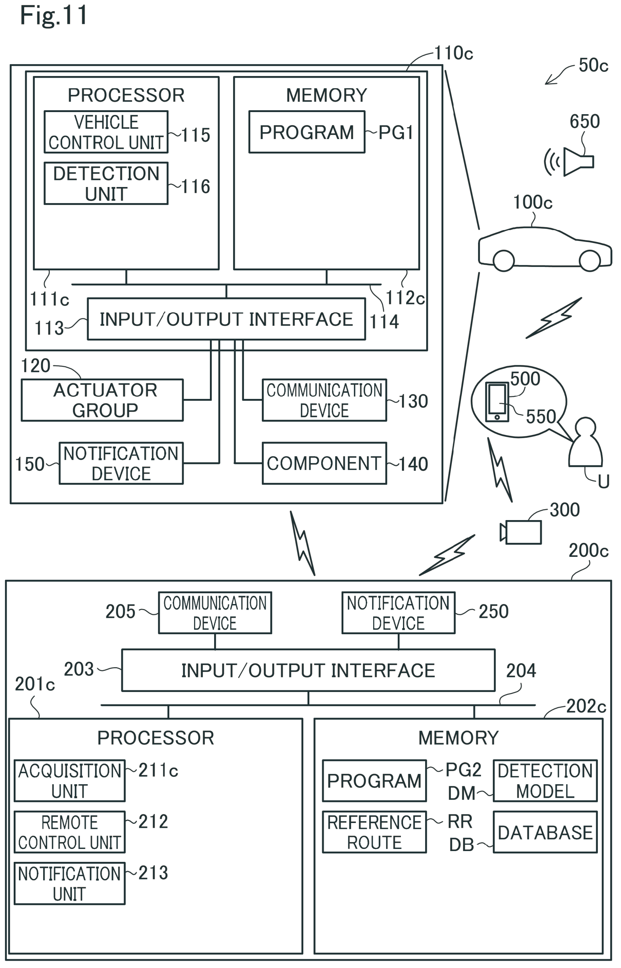

Fig. 11 is a block diagram illustrating a configuration of a control system 50c according to a fourth embodiment. In this embodiment, after the control signal, such as the component control signal or the notification control signal, to cause the open-close state of the component 140 to be the close state is transmitted by the remote control unit 212, the control system 50c confirms that the open-close state of the component 140 is the close state. Then, when the open-close state of the component 140 cannot be made the close state due to any malfunction, the control system 50c notifies the user U of error information. Accordingly, it can be suppressed that an inside of a vehicle 100c is soaked with water. Other configurations are the same as those of the first embodiment unless otherwise described. The same configurations as those of each embodiment described above are denoted by the same reference characters, and description thereof is omitted.

A processor 111c of a vehicle control device 110c executes the program PG1 stored in a memory 112c, thus implementing various functions including the functions as the vehicle control unit 115 and the detection unit 116.

A processor 201c of a server 200c executes the program PG2 stored in a memory 202c, thus implementing various functions including functions as an acquisition unit 211c, the remote control unit 212, and a notification unit 213.

The acquisition unit 211c further acquires, in addition to the step information, the open-close information indicating the open-close state of the component 140 at a time point after the remote control unit 212 transmits the control signal to cause the open-close state of the component 140 to be the close state.

When the open-close state of the component 140 identified by the open-close information at the time point after the remote control unit 212 transmits the control signal to cause the open-close state of the component 140 to be the close state is the open state, the notification unit 213 notifies the user U of the error information on the vehicle 100c. At this time, for example, the notification unit 213 notifies the user U via at least one of the notification device 150 of the vehicle 100c, the notification device 250 of the server 200c, the notification device 550 of the portable terminal 500 held by the user U, and the notification device 650 installed in the factory FC. For example, the notification unit 213 causes a horn to sound, and thereby notifies the user U that the open-close state of the component 140 is the open state. The horn is installed in the vehicle 100c and generates warning sound. The notification unit 213 may cause a lamp installed in the vehicle 100c to be turned on or to blink, or cause a wiper installed in the vehicle 100c to swing, and thereby notify the user U that the open-close state of the component 140 is the open state. Moreover, the notification unit 213 may display text information indicating that the component 140 is the open state on a display of the server 200c or the portable terminal 500 or a monitor installed in the factory FC, and thereby notify the user U that the open-close state of the component 140 is the open state. The notification unit 213 may play audio information indicating that the open-close state of the component 140 is the open state from a speaker of the server 200c or the portable terminal 500 or a speaker installed in the factory FC, and thereby notify the user U that the open-close state of the component 140 is the open state. In this embodiment, the notification unit 213 generates the notification control signal to sound the horn and transmits the notification control signal to the vehicle 100c to sound the horn by remote control.

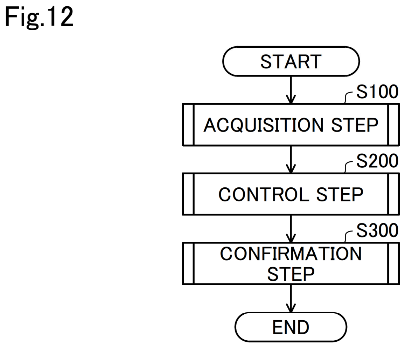

Fig. 12 is a flowchart illustrating another example of the method for controlling the component 140. In the control method illustrated in Fig. 12, after execution of the acquisition step and the control step described above, a confirmation step at Step S300 is executed. The confirmation step is a step to confirm that the open-close state of the component 140 is the close state at the time point after the remote control unit 212 transmits the control signal to cause the open-close state of the component 140 to be the close state. In this embodiment, the confirmation step includes a notification step to notify the user U of the error information depending on the open-close state of the component 140. For example, the flow illustrated in Fig. 12 is repetitively executed at a time period determined in advance from a time point at which production of the vehicle 100c starts.

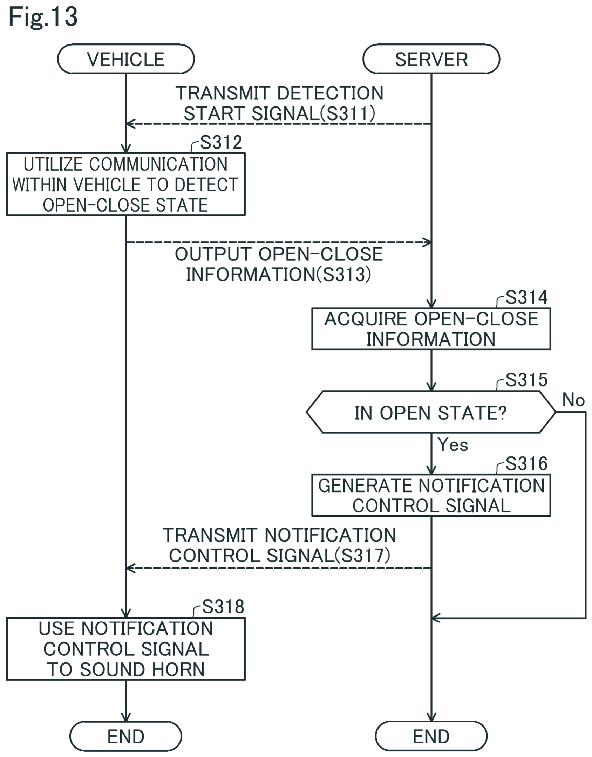

Fig. 13 is a flowchart illustrating details of the confirmation step according to the fourth embodiment. For example, the flow illustrated in Fig. 13 is started when given time determined in advance has passed since the remote control unit 212 transmits the control signal to cause the open-close state of the component 140 to be the close state. For example, the given time is set in accordance with time required to change the open-close state of the component 140 from the open state to the close state. At Step S311, the remote control unit 212 of the server 200c transmits to the vehicle 100c the detection start signal to start detection of the open-close state of the power window. In response to reception of the detection start signal, at Step S312, the detection unit 116 of the vehicle 100c utilizes communication within the vehicle 100c to detect the open-close state of the power window. As Step S313, the detection unit 116 outputs to the server 200c the open-close information as the detection result. Accordingly, at Step S314, the acquisition unit 211c of the server 200c acquires the open-close information. If the open-close state of the power window identified by the open-close information is the close state (Step S315: No), the notification unit 213 of the server 200c ends this flow without notifying the user U of the error information. If the open-close state of the power window identified by the open-close information is the open state (Step S315: Yes), Step S316 is executed. At Step S316, the notification unit 213 generates the notification control signal to sound the horn of the vehicle 100c. At Step S317, the notification unit 213 transmits the generated notification control signal to the vehicle 100c. In response to reception of the notification control signal, at Step S318, the vehicle control unit 115 of the vehicle 100c uses the received notification control signal to sound the horn.

According to the fourth embodiment, after the control signal to cause the open-close state of the component 140 to be the close state is transmitted by the remote control unit 212, the control system 50c can confirm that the open-close state of the component 140 is the close state. Then, the control system 50c can notify the user U of the error information when the open-close state of the component 140 is the open state even after the control signal to cause the open-close state of the component 140 to be the close state is transmitted by the remote control unit 212. With this configuration, the user U can be encouraged to take action to cause the open-close state of the component 140 to be the close state, and execution of the production step in which the vehicle 100c has a possibility to contact water while the open-close state of the component 140 is the open state can be avoided. Therefore, it can more surely be suppressed that the inside of the vehicle 100c is soaked with water.

### E. Fifth Embodiment:

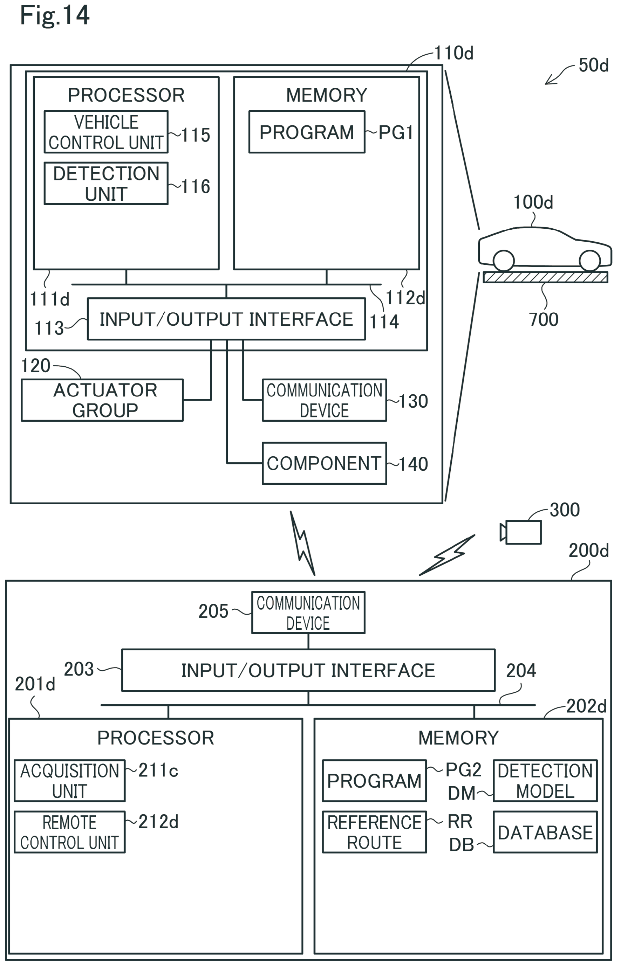

Fig. 14 is a block diagram illustrating a configuration of a control system 50d according to a fifth embodiment. In this embodiment, at least in a partial section in the factory FC, a vehicle 100d does not run by unmanned driving but is transported by using transport equipment 700, such as a crane or a conveyor. Then, when the open-close state of the component 140 cannot be made the close state due to any malfunction, the control system 50d causes the transport equipment 700 to stop operation of transporting the vehicle 100d toward the place PL2 where the specific production step is executed. Accordingly, the control system 50d can suppress that an inside of the vehicle 100d is soaked with water. Other configurations are the same as those of the first embodiment unless otherwise described. The same configurations as those of each embodiment described above are denoted by the same reference characters, and description thereof is omitted.

A processor 111d of a vehicle control device 110d executes the program PG1 stored in a memory 112d, thus implementing various functions including the functions as the vehicle control unit 115 and the detection unit 116.

A processor 201d of a server 200d executes the program PG2 stored in a memory 202d, thus implementing various functions including functions as the acquisition unit 211c and a remote control unit 212d.

The remote control unit 212d further stops the operation of the transport equipment 700 when the open-close state of the component 140 identified by the open-close information at the time point after transmission of the control signal to cause the open-close state of the component 140 to be the close state is the open state. In this embodiment, the remote control unit 212d generates an equipment control signal and transmits the equipment control signal to the transport equipment 700 to stop the operation of the transport equipment 700 by remote control. The equipment control signal is a control signal to control the operation of the transport equipment 700.

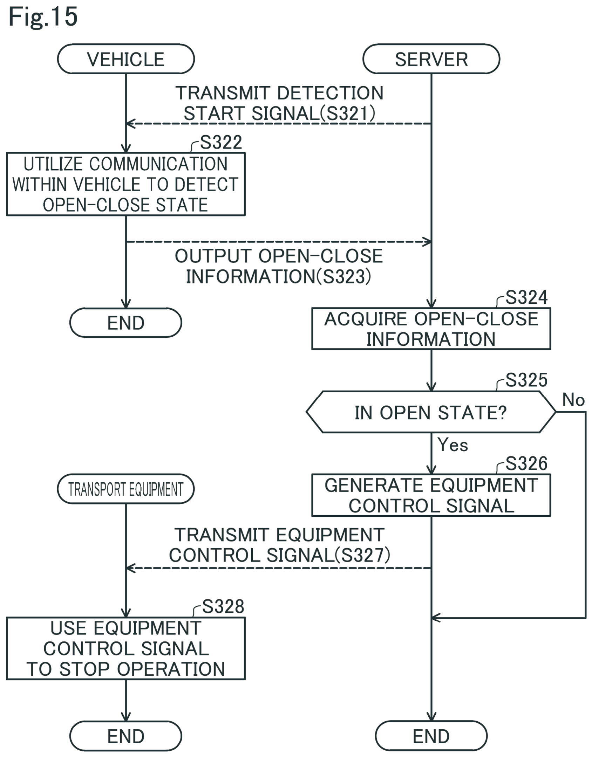

Fig. 15 is a flowchart illustrating details of a confirmation step according to the fifth embodiment. In this embodiment, the confirmation step includes an equipment stop step to stop the operation of the transport equipment 700 depending on the open-close state of the component 140. For example, the flow illustrated in Fig. 15 is started when the given time determined in advance has passed since the remote control unit 212d transmits the control signal to cause the open-close state of the component 140 to be the close state. At Step S321, the remote control unit 212d of the server 200d transmits to the vehicle 100d the detection start signal to start detection of the open-close state of the power window. In response to reception of the detection start signal, at Step S322, the detection unit 116 of the vehicle 100d utilizes communication within the vehicle 100d to detect the open-close state of the power window. As Step S323, the detection unit 116 outputs to the server 200d the open-close information as the detection result. Accordingly, at Step S324, the acquisition unit 211c of the server 200d acquires the open-close information. If the open-close state of the power window identified by the open-close information is the close state (Step S325: No), the remote control unit 212d of the server 200d ends this flow without stopping the operation of the transport equipment 700. If the open-close state of the power window identified by the open-close information is the open state (Step S325: Yes), Step S326 is executed. At Step S326, the remote control unit 212d generates the equipment control signal to stop the operation of the transport equipment 700. At Step S327, the remote control unit 212d transmits the generated equipment control signal to the transport equipment 700. In response to reception of the equipment control signal, at Step S328, the transport equipment 700 uses the received equipment control signal to stop the operation.

According to the fifth embodiment, the control system 50d can stop the operation of the transport equipment 700 when the open-close state of the component 140 is the open state even after the control signal to cause the open-close state of the component 140 to be the close state is transmitted by the remote control unit 212d. With this configuration, execution of the production step in which the vehicle 100d has a possibility to contact water while the open-close state of the component 140 is the open state can be avoided. Therefore, it can more surely be suppressed that the inside of the vehicle 100d is soaked with water.

### F. Sixth Embodiment:

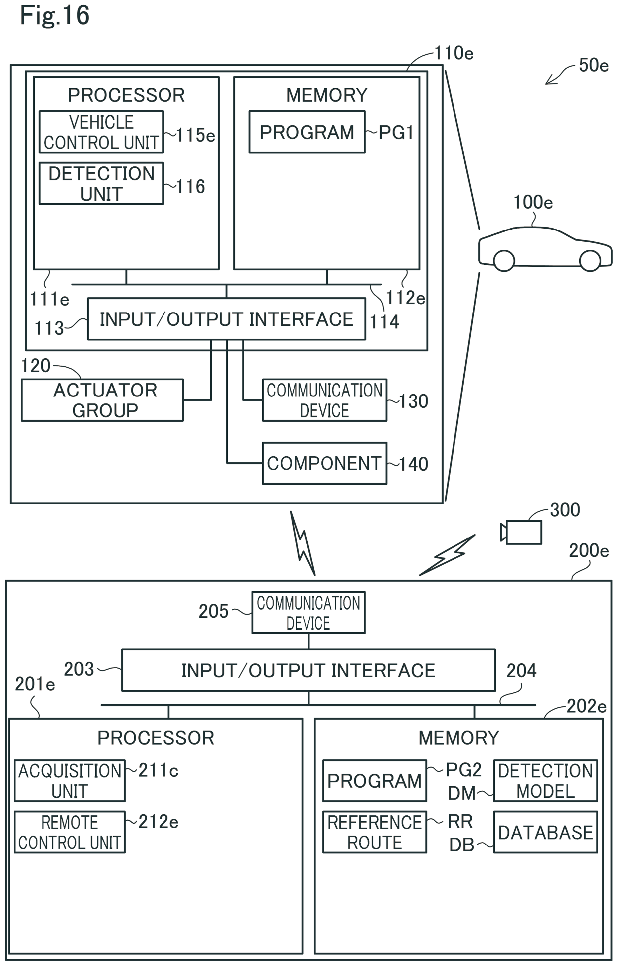

Fig. 16 is a block diagram illustrating a configuration of a control system 50e according to a sixth embodiment. In this embodiment, when the open-close state of the component 140 cannot be made the close state due to any malfunction, the control system 50d causes a vehicle 100e to stop operation of running by unmanned driving toward the place PL2 where the specific production step is executed. Accordingly, the control system 50e can suppress that an inside of the vehicle 100e is soaked with water. Other configurations are the same as those of the first embodiment unless otherwise described. The same configurations as those of each embodiment described above are denoted by the same reference characters, and description thereof is omitted.

A processor 201e of a server 200e executes the program PG2 stored in a memory 202e, thus implementing various functions including functions as the acquisition unit 211c and a remote control unit 212e.

The remote control unit 212e further operates as follows when the open-close state of the component 140 identified by the open-close information at the time point after transmission of the control signal to cause the open-close state of the component 140 to be the close state is the open state. The remote control unit 212e causes the vehicle 100e to stop the operation of running by unmanned driving toward the place PL2 where the specific production step is executed. In this embodiment, the remote control unit 212e generates a stop control signal and transmits the stop control signal to the vehicle 100e to stop the operation of the vehicle 100e by remote control. The stop control signal is a control signal to stop the vehicle 100e.

A processor 111e of a vehicle control device 110e executes the program PG1 stored in a memory 112e, thus implementing various functions including functions as a vehicle control unit 115e and the detection unit 116.

The vehicle control unit 115e further uses the stop control signal received from the server 200e to control the actuator group 120, and thereby stops the vehicle 100e.

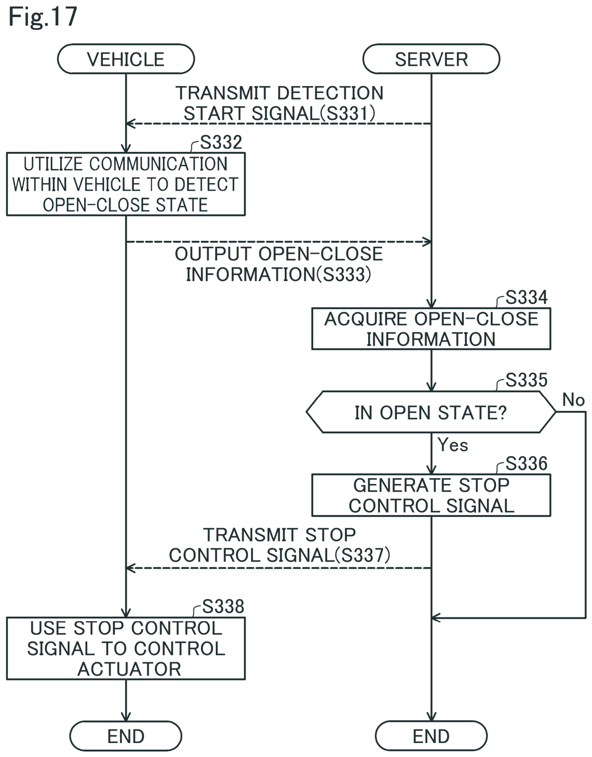

Fig. 17 is a flowchart illustrating details of a confirmation step according to the sixth embodiment. In this embodiment, the confirmation step includes a vehicle stop step to stop the operation of the vehicle 100e depending on the open-close state of the component 140. For example, the flow illustrated in Fig. 17 is started when the given time determined in advance has passed since the remote control unit 212e transmits the control signal to cause the open-close state of the component 140 to be the close state. At Step S331, the remote control unit 212e of the server 200e transmits to the vehicle 100e the detection start signal to start detection of the open-close state of the power window. In response to reception of the detection start signal, at Step S332, the detection unit 116 of the vehicle 100e utilizes communication within the vehicle 100e to detect the open-close state of the power window. As Step S333, the detection unit 116 outputs to the server 200e the open-close information as the detection result. Accordingly, at Step S334, the acquisition unit 211c of the server 200e acquires the open-close information. If the open-close state of the power window identified by the open-close information is the close state (Step S335: No), the remote control unit 212e of the server 200e ends this flow without stopping the operation of the vehicle 100e. If the open-close state of the power window identified by the open-close information is the open state (Step S335: Yes), Step S336 is executed. At Step S336, the remote control unit 212e generates the stop control signal to cause the vehicle 100e to stop the operation of running by unmanned driving for the specific production step. At Step S337, the remote control unit 212e transmits the generated stop control signal to the vehicle 100e running by unmanned driving for the specific production step. In response to reception of the stop control signal, at Step S338, the vehicle 100e uses the received stop control signal to control the actuator group 120, and thereby stops the vehicle 100e.

According to the sixth embodiment, the control system 50e can operate as follows when the open-close state of the component 140 is the open state even after the control signal to cause the open-close state of the component 140 to be the close state is transmitted by the remote control unit 212e. The control system 50e can cause the vehicle 100e to stop the operation of running by unmanned driving for the production step in which the vehicle 100e has a possibility to contact water. With this configuration, execution of the production step in which the vehicle 100e has a possibility to contact water while the open-close state of the component 140 is the open state can be avoided. Therefore, it can more surely be suppressed that the inside of the vehicle 100e is soaked with water.

### G. Seventh Embodiment:

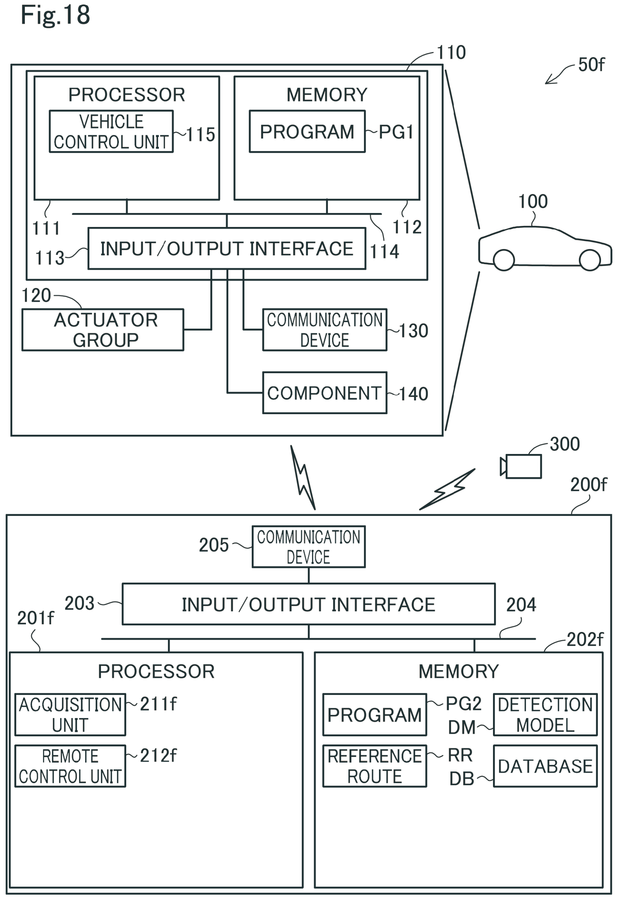

Fig. 18 is a block diagram illustrating a configuration of a control system 50f according to a seventh embodiment. In this embodiment, the control system 50f starts control of the open-close state of the component 140 in accordance with time required to change the open-close state of the component 140 from the open state to the close state. Therefore, in the specific production step, the open-close state of the component 140 can more surely be made the close state. Other configurations are the same as those of the first embodiment unless otherwise described. The same configurations as those of each embodiment described above are denoted by the same reference characters, and description thereof is omitted.

A processor 201f of a server 200f executes the program PG2 stored in a memory 202f, thus implementing various functions including functions as an acquisition unit 211f and a remote control unit 212f.

The acquisition unit 211f further acquires, in addition to the step information, required time information indicating time required to change the open-close state of the component 140 from the open state to the close state. For example, the acquisition unit 211f refers to a table to acquire the required time information. The table is stored in the memory 202f in advance and indicates the time required to change the open-close state of the component 140 from the open state to the close state for each type of the component 140. The acquisition unit 211f may use a current opening degree of the component 140 and open-close speed of the component 140 to calculate the time required to change the open-close state of the component 140 from the open state to the close state, and thereby acquire the required time information.

The remote control unit 212f uses the required time information to start control of the component 140 in such a manner that the open-close state of the component 140 becomes the close state before the start of the specific production step. For example, the remote control unit 212f uses the production management information to identify the scheduled start time of the specific production step. The remote control unit 212f may use a distance between the production equipment 400 installed in the place PL2 where the specific production step is executed and the vehicle 100 and running speed of the vehicle 100 to identify the scheduled start time of the specific production step. Then, the remote control unit 212f uses the required time information to determine a timing to start the control of the component 140 in such a manner that the open-close state of the component 140 becomes the close state by the scheduled start time of the specific production step. Then, the remote control unit 212f generates the component control signal and transmits the component control signal to the vehicle 100 in such a manner as to be able to start the control of the component 140 at the determined timing.

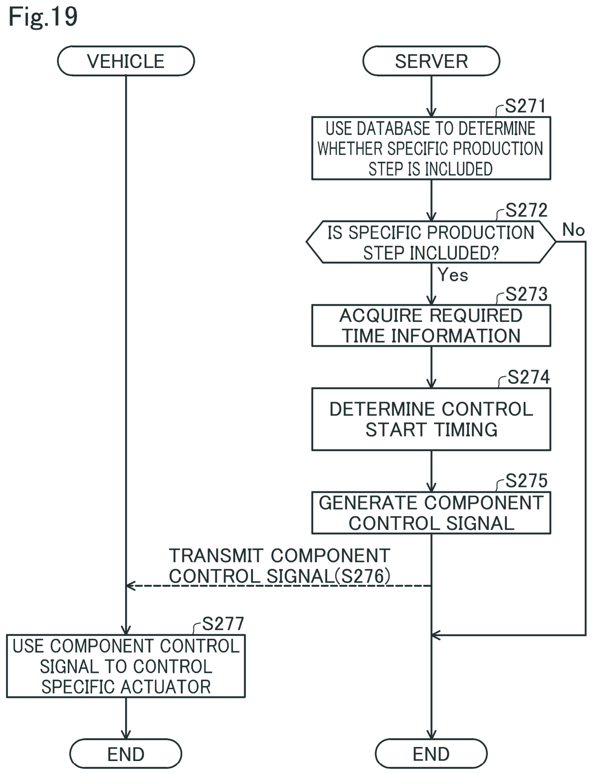

Fig. 19 is a flowchart illustrating details of a control step according to the seventh embodiment. For example, the flow illustrated in Fig. 19 is started when the acquisition of the step information is completed. At Step S271, the remote control unit 212f of the server 200f uses the database DB indicating the specific production step to determine whether the production step identified by the step information includes the specific production step. If the production step identified by the step information does not include the specific production step (Step S272: No), the remote control unit 212f ends this flow without controlling the open-close state of the power window. If the production step identified by the step information includes the specific production step (Step S272: Yes), Step S273 is executed. At Step S273, the acquisition unit 211f of the server 200f acquires the required time information for the power window. At Step S274, the remote control unit 212f uses the acquired required time information to determine the timing to start the control of the power window. At Step S275, the remote control unit 212f generates the component control signal in such a manner as to be able to start the control of the power window at the determined timing. At Step S276, the remote control unit 212f transmits the generated component control signal to the vehicle 100 in such a manner as to be able to start the control of the power window at the determined timing. In response to reception of the component control signal, at Step S277, the vehicle control unit 115 of the vehicle 100 uses the received component control signal to control the specific actuator. Accordingly, the open-close state of the power window is made the close state before the start of the specific production step.

According to the seventh embodiment, the control system 50f can cause the open-close state of the component 140 to be the close state before the start of the production step in which the vehicle 100 has a possibility to contact water. Therefore, it can more surely be suppressed that the inside of the vehicle 100 is soaked with water.

### H. Eighth Embodiment:

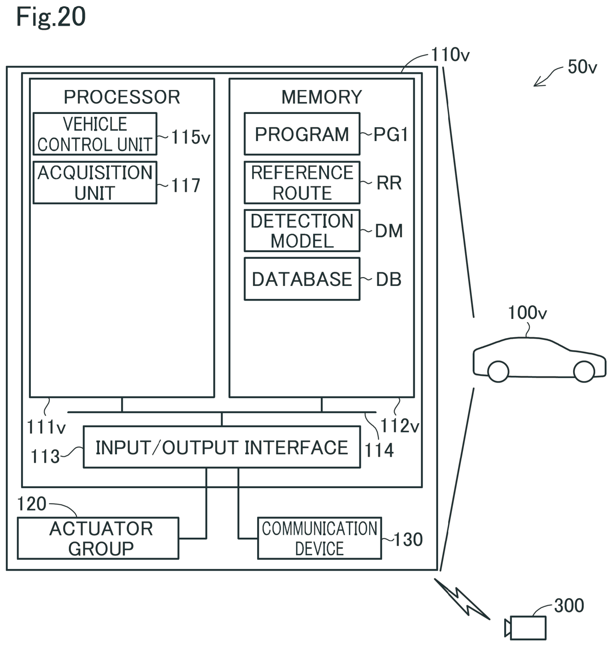

Fig. 20 is an explanatory diagram illustrating a schematic configuration of a control system 50v according to an eighth embodiment. This embodiment is different from the first embodiment in that the control system 50v does not include the server 200. Moreover, a vehicle 100v of this embodiment is runnable by autonomous control of the vehicle 100v. Other configurations are the same as those of the first embodiment unless otherwise described. The same configurations as those of each embodiment described above are denoted by the same reference characters, and description thereof is omitted.

In this embodiment, a processor 111v of a vehicle control device 110v executes the program PG1 stored in a memory 112v, thus functioning as a vehicle control unit 115v and an acquisition unit 117. The acquisition unit 117 acquires a variety of information including the step information. The vehicle control unit 115v acquires an output result of the sensor and uses the output result to generate the running control signal. The vehicle control unit 115v then outputs the generated running control signal to cause the actuator group 120 to operate, and thus can cause the vehicle 100v to run by autonomous control. In this embodiment, the memory 112v stores, in addition to the program PG1, a detection model DM and a reference route RR in advance. Further, when the production step identified by the step information includes the specific production step, the vehicle control unit 115v controls the open-close state of the component 140 in such a manner that the open-close state of the component 140 becomes the close state in the specific production step.

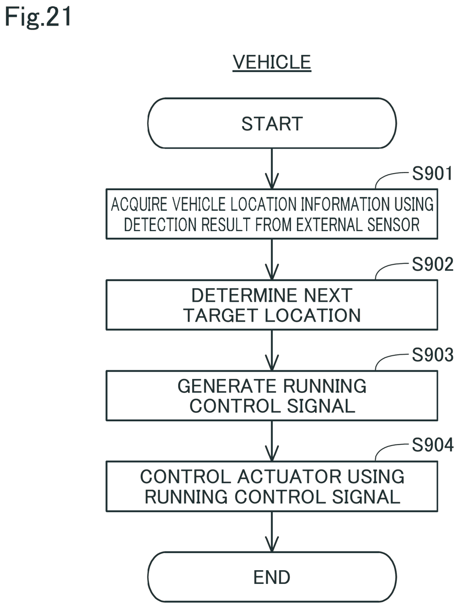

Fig. 21 is a flowchart illustrating a procedure for running control of the vehicle 100v according to the eighth embodiment. In the procedure illustrated in Fig. 21, the processor 111v of the vehicle 100v executes the program PG1, thus functioning as the vehicle control unit 115v.

In step S901, the processor 111v of the vehicle control device 110v acquires vehicle location information using detection result output from the camera as an external sensor 300. In step S902, the processor 111v determines a target location to which the vehicle 100v is to move next. In step S903, the processor 111v generates a running control signal for causing the vehicle 100v to run to the determined target location. In step S904, the processor 111v controls the actuator group 120 using the generated running control signal, thereby causing the vehicle 100v to run by following a parameter indicated by the running control signal. The processor 111v repeats the acquisition of vehicle location information, the determination of a target location, the generation of a running control signal, and the control over the actuator group 120 in a predetermined cycle. According to the control system 50v in the present embodiment, it is possible to cause the vehicle 100v to run by autonomous control without controlling the vehicle 100v remotely using the server 200, 200a to 200f.

According to the eighth embodiment, the control system 50v can automatically cause the open-close state of the component 140 to be the close state by autonomous control of the vehicle 100v.

### I. Other Embodiments:

(11) It is not essential for the vehicle 100, 100a to 100d, 100v to be runnable by unmanned driving. For example, in each of the embodiments described above except for the sixth embodiment, the vehicle 100, 100a to 100d, 100v may run by manned driving in at least a partial section in the factory FC.

(12) Also in a production step in which the vehicle 100, 100a to 100e, 100v has a possibility to contact liquid other than water, a similar problem may occur. Therefore, the specific production step may be a production step in which the vehicle 100, 100a to 100e, 100v has a possibility to contact liquid other than water. For example, the specific production step may be a painting step in which the vehicle 100, 100a to 100e, 100v contacts paint as liquid. The specific production step may be a washing step in which a body of the vehicle 100, 100a to 100e, 100v is washed with liquid detergent as liquid, or a coating step in which water repellent as liquid is applied to the body of the vehicle 100, 100a to 100e, 100v. In the case in which the specific production step is the production step in which the vehicle 100, 100a to 100e, 100v has a possibility to contact liquid other than water, expression of "water" in the present disclosure can be replaced by "liquid" or "solution" as appropriate. With this configuration, it can be suppressed that liquid other than water unintendedly enters the vehicle 100, 100a to 100e, 100v.

(I3) The control system 50, 50a to 50f, 50v may be used at any place other than the factory FC where the vehicle 100, 100a to 100e, 100v is produced. That is, the control system 50, 50a to 50f, 50v may control the open-close state of the component 140 installed in the vehicle 100, 100a to 100e, 100v that has been shipped. For example, the control system 50, 50a to 50f, 50v may control the open-close state of the component 140 when a liquid leak inspection step is performed after replacement of glass included in a moonroof at a repair site where the vehicle 100, 100a to 100e, 100v is repaired. The control system 50, 50a to 50f, 50v may control the open-close state of the component 140 when parking the vehicle 100, 100a to 100e, 100v at an outdoor parking site. The control system 50, 50a to 50f, 50v may control the open-close state of the component 140 at a gas station where a washing machine to wash the vehicle 100, 100a to 100e, 100v is installed. In a case in which the work step is a step other than the production step, the expression of "production" in the present disclosure can be replaced by "work" as appropriate. With this configuration, the control system 50, 50a to 50f, 50v can control the open-close state of the component 140 installed in the vehicle 100, 100a to 100e, 100v that has been shipped. Accordingly, also at a place other than the factory FC, it can be suppressed that the inside of the vehicle 100, 100a to 100e, 100v is soaked with water.

(I4) In each of the above-described embodiments, the external sensor 300 is not limited to the camera but may be the distance measuring device, for example. The distance measuring device is a light detection and ranging (LiDAR) device, for example. In this case, detection result output from the external sensor 300 may be three-dimensional point cloud data representing the vehicle 100, 100 to 100e, 100v. The server 200, 200a to 200f and the vehicle 100, 100a to 100e, 100v may acquire the vehicle location information through template matching using the three-dimensional point cloud data as the detection result and reference point cloud data, for example.

(15) In the above-described first embodiment, the server 200, 200a to 200f performs the processing from acquisition of vehicle location information to generation of a running control signal. By contrast, the vehicle 100, 100a to 100e may perform at least part of the processing from acquisition of vehicle location information to generation of a running control signal. For example, embodiments (1) to (3) described below are applicable, for example.
(1) The server 200, 200a to 200f may acquire vehicle location information, determine a target location to which the vehicle 100, 100a to 100e is to move next, and generate a route from a current location of the vehicle 100, 100a to 100e indicated by the acquired vehicle location information to the target location. The server 200, 200a to 200f may generate a route to the target location between the current location and a destination or generate a route to the destination. The server 200, 200a to 200f may transmit the generated route to the vehicle 100, 100a to 100e. The vehicle 100, 100a to 100e may generate a running control signal in such a manner as to cause the vehicle 100, 100a to 100e to run along the route received from the server 200, 200a to 200f and control the actuator group 120 using the generated running control signal.
(2) The server 200, 200a to 200f may acquire vehicle location information and transmit the acquired vehicle location information to the vehicle 100, 100a to 100e. The vehicle 100, 100a to 100e may determine a target location to which the vehicle 100, 100a to 100e is to move next, generate a route from a current location of the vehicle 100, 100a to 100e indicated by the received vehicle location information to the target location, generate a running control signal in such a manner as to cause the vehicle 100 to run along the generated route, and control the actuator group 120 using the generated running control signal.
(3) In the foregoing embodiments (1) and (2), an internal sensor may be mounted on the vehicle 100, 100a to 100e and detection result output from the internal sensor may be used in at least one of the generation of the route and the generation of the running control signal. The internal sensor is a sensor mounted on the vehicle 100, 100a to 100e, 100v. More specifically, the internal sensor might include a camera, LiDAR, a millimeter wave radar, an ultrasonic wave sensor, a GPS sensor, an acceleration sensor, and a gyroscopic sensor, for example. For example, in the foregoing embodiment (1), the server 200, 200a to 200f may acquire detection result from the internal sensor, and in generating the route, may reflect the detection result from the internal sensor in the route. In the foregoing embodiment (1), the vehicle 100, 100a to 100e may acquire detection result from the internal sensor, and in generating the running control signal, may reflect the detection result from the internal sensor in the running control signal. In the foregoing embodiment (2), the vehicle 100, 100a to 100e may acquire detection result from the internal sensor, and in generating the route, may reflect the detection result from the internal sensor in the route. In the foregoing embodiment (2), the vehicle 100, 100a to 100e may acquire detection result from the internal sensor, and in generating the running control signal, may reflect the detection result from the internal sensor in the running control signal.

(16) In the eighth embodiment, the vehicle 100v may be mounted with an internal sensor, and a detection result output from the internal sensor may be used for at least one of generation of a path and generation of the running control signal. For example, the vehicle 100v may acquire the detection result of the internal sensor and reflect the detection result of the internal sensor on the path when generating the path. The vehicle 100v may acquire the detection result of the internal sensor and reflect the detection result of the internal sensor on the running control signal when generating the running control signal.

(I7) In the eighth embodiment, the vehicle 100v acquires vehicle location information using detection result from the external sensor 300. By contrast, the vehicle 100v may be equipped with an internal sensor, the vehicle 100 may acquire vehicle location information using detection result from the internal sensor, determine a target location to which the vehicle 100v is to move next, generate a route from a current location of the vehicle 100v indicated by the acquired vehicle location information to the target location, generate a running control signal for running along the generated route, and control the actuator group 120 of the vehicle 100v using the generated running control signal. In this case, the vehicle 100v is capable of running without using any detection result from an external sensor 300. The vehicle 100v may acquire target arrival time or traffic congestion information from outside the vehicle 100v and reflect the target arrival time or traffic congestion information in at least one of the route and the running control signal. The functional configuration of the control system 50v may be entirely provided at the vehicle 100v. Specifically, the processes realized by the control system 50v in the present disclosure may be realized by the vehicle 100v alone.

(I8) In each of the above-described embodiments, the server 200, 200a to 200f automatically generates a running control signal to be transmitted to the vehicle 100, 100a to 100e. By contrast, the server 200, 200a to 200f may generate a running control signal to be transmitted to the vehicle 100, 100a to 100e in response to operation by an external operator existing outside the vehicle 100, 100a to 100e. For example, the external operator may operate an operating device including a display on which a captured image output from the external sensor 300 is displayed, steering, an accelerator pedal, and a brake pedal for operating the vehicle 100, 100a to 100e remotely, and a communication device for making communication with the server 200, 200a to 200f through wire communication or wireless communication, for example, and the server 200, 200a to 200f may generate a running control signal responsive to the operation on the operating device.

(19) In each of the above-described embodiments, the vehicle 100, 100a to 100e, 100v is simply required to have a configuration to become movable by unmanned driving. The vehicle 100, 100a to 100e, 100v may embodied as a platform having the following configuration, for example. The vehicle 100, 100a to 100e, 100v is simply required to include at least the vehicle control device 110, 110a to 110e, 110v and the actuator group 120. More specifically, in order to fulfill three functions including "run," "turn," and "stop" by unmanned driving, the actuators may include a driving device, a steering device and a braking device. The actuators are controlled by the controller that controls running of the vehicle 100, 100a to 100e, 100v. In order for the vehicle 100, 100a to 100e, 100v to acquire information from outside for unmanned driving, the vehicle 100, 100a to 100e, 100v is simply required to include the communication device 130 further. Specifically, the vehicle 100, 100a to 100e, 100v to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 100, 100a to 100e, 100v before the vehicle 100, 100a to 100e, 100v is shipped from a factory, or a remaining component such as a bodyshell may be mounted on the vehicle 100, 100a to 100e, 100v after the vehicle 100, 100a to 100e, 100v is shipped from a factory while the remaining component such as a bodyshell is not mounted on the vehicle 100, 100a to 100e, 100v. Each of components may be mounted on the vehicle 100, 100a to 100e, 100v from any direction such as from above, from below, from the front, from the back, from the right, or from the left. Alternatively, these components may be mounted from the same direction or from respective different directions. The location determination for the platform may be performed in the same way as for the vehicle 100, 100a to 100e, 100v in the first embodiments.

(110) The vehicle 100, 100a to 100e, 100v may be manufactured by combining a plurality of modules. The module means a unit composed of one or more components grouped according to a configuration or function of the vehicle 100, 100a to 100e, 100v. For example, a platform of the vehicle 100, 100a to 100e, 100v may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100, 100a to 100e, 100v different from the platform may be modularized. Various modules may include an arbitrary exterior component such as a bumper or a grill, or an arbitrary interior component such as a seat or a console. Not only the vehicle 100, 100a to 100e, 100v but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

(I11) A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.

(112) In each of the above-described embodiments, some or all of the functions and processes implemented in software may be implemented on hardware. In addition, some or all of the functions and processes implemented on hardware may be implemented in software. For example, various circuits such as an integrated circuit and a discrete circuit may be used as hardware for realizing various functions in the above-described embodiments.

The present disclosure is not limited to the above-described embodiments but can be implemented in a variety of configurations without departing from the spirit of the present disclosure. For example, in order to solve some or all of the aforementioned problems or to achieve some or all of the aforementioned effects, the technical features of the embodiment corresponding to the technical features in each aspect described in the summary can appropriately be replaced or combined. Moreover, unless the technical feature is explained herein as being essential, it can be eliminated as appropriate.

## Claims

1. A control system (50;50a;50b;50c;50d;50f;50v) configured to control an open-close state of a component (140) that is installed in a moving object (100;100a;100b;100c;100d;100e;100v) and whose open-close state is changeable, wherein
the component (140) separates an inside and an outside of the moving object (100;100a;100b;100c;100d;100e;100v) in a close state,
the control system (50;50a;50b;50c;50d;50f;50v) comprising:
an acquisition unit (117;211;211a;211c;211f) configured to acquire step information indicating a work step to be executed to the moving object (100;100a;100b;100c;100d;100e;100v); and
a control unit (115v;212;212a;212b;212d;212e;212f) configured to control the open-close state of the component (140) in such a manner that the open-close state of the component (140) becomes the close state in a specific work step when the work step identified by the step information comprises the specific work step, the specific work step being a work step in which the moving object (100;100a;100b;100c;100d;100e;100v) has a possibility to contact liquid.

2. The control system (50a;50b) according to claim 1, wherein the acquisition unit (211a) is further configured to acquire open-close information indicating the open-close state of the component (140), and
when the open-close state of the component (140) identified by the open-close information is an open state, the control unit (212a;212b) is configured to change the open-close state of the component from the open state to the close state.

3. The control system (50c) according to claim 1, wherein the acquisition unit (212c) is further configured to acquire open-close information indicating the open-close state of the component (140) at a time point after the control unit (212) transmits a control signal to cause the open-close state of the component (140) to be the close state, and
the control system (50c) further comprises a notification unit configured to notify a user of error information when the open-close state of the component (140) identified by the open-close information at the time point is an open state.

4. The control system (50d) according to claim 1, wherein the acquisition unit (212c) is further configured to acquire open-close information indicating the open-close state of the component (140) at a time point after the control unit (212d) transmits a control signal to cause the open-close state of the component (140) to be the close state, and
when the open-close state of the component (140) identified by the open-close information at the time point is an open state, the control unit (212d) is configured to cause a transport equipment (700) to stop operation of transporting the moving object (100;100a;100b;100c;100d;100e;100v) toward a place at which the specific work step is executed.

5. The control system (50e) according to claim 1, wherein the moving object (100;100a;100b;100c;100d;100e;100v) is movable by unmanned driving,
the acquisition unit (211c) is further configured to acquire open-close information indicating the open-close state of the component at a time point after the control unit (212e) transmits a control signal to cause the open-close state of the component (140) to be the close state, and
when the open-close state of the component (140) identified by the open-close information at the time point is an open state, the control unit (212e) is configured to cause the moving object (100;100a;100b;100c;100d;100e;100v) to stop operation of moving by the unmanned driving toward a place at which the specific work step is executed.

6. The control system according any one of claims 2 to 5, further comprising a detection unit (50a;50c;50d;50e) configured to utilize communication within the moving object (100;100a;100b;100c;100d;100e;100v) to detect the open-close state of the component (140), and output the open-close information.

7. The control system (50b) according any one of claims 2 to 5, further comprising:
a senor (300) configured to detect the moving object (100;100a;100b;100c;100d;100e;100v) from an outside of the moving object (100;100a;100b;100c;100d;100e;100v); and
a detection unit (210) configured to use a detection result of the sensor (300) to detect the open-close state of the component (140), and output the open-close information.

8. The control system (50) according to claim 1, wherein the acquisition unit (211) is configured to acquire the step information by utilizing communication between the moving object and equipment installed in a place (PL1;PL2) at which the work step is executed.

9. The control system (50) according to claim 1, further comprising a memory (202) storing database (DB) indicating the specific work step, wherein
when the work step identified by the step information is comprised in the database, the control unit (212) is configured to determine that the work step comprised in the database (DB) is the specific work step.

10. The control system (50) according to claim 1, wherein the acquisition unit (211f) is further configured to acquire required time information indicating time required to change the open-close state of the component (140) from an open state to the close state, and
the control unit (212f) is configured to use the required time information to start control of the component (140) in such a manner that the open-close state of the component (140) becomes the close state before a start of the specific work step.

11. The control system (50) according to claim 1, wherein the specific work step is a liquid leak inspection step in which whether the liquid enters inside the moving object (100;100a;100b;100c;100d;100e;100v) when the liquid is poured over the moving object (100;100a;100b;100c;100d;100e;100v).

12. The control system (50) according to claim 1, wherein the specific work step is the work step in which the moving object (100;100a;100b;100c;100d;100e;100v) moves outdoors.

13. The control system (50) according to claim 1, wherein the specific work step is a washing step in which a body of the moving object (100;100a;100b;100c;100d;100e;100v) is washed.

14. The control system (50) according to claim 1, wherein the component (140) is at least one of a window, a door, a trunk lid, a hood, and a roof.

15. A method for controlling an open-close state of a component (140) that is installed in a moving object (100;100a;100b;100c;100d;100e;100v) and whose open-close state is changeable, wherein
the component (140) separates an inside and an outside of the moving object (100;100a;100b;100c;100d;100e;100v) in a close state,
the method comprising:
an acquisition step of acquiring step information indicating a work step to be executed to the moving object; and
a control step of controlling the open-close state of the component in such a manner that the open-close state of the component becomes the close state in a specific work step when the work step identified by the step information comprises the specific work step, the specific work step being a work step in which the moving object has a possibility to contact liquid.
